(19) Europäisches Patentamt
European Patent Office
Office européen des brevets

(11) EP 0 811 029 B1

(12) EUROPEAN PATENT SPECIFICATION

(45) Date of publication and mention of the grant of the patent:
**27.10.1999 Bulletin 1999/43**

(21) Application number: **96903197.0**

(22) Date of filing: **21.02.1996**

(51) Int Cl.[6]: **C08G 65/32**, H01M 6/18, H01M 10/40, C08F 290/14, C08F 290/06

(86) International application number:
**PCT/JP96/00384**

(87) International publication number:
**WO 96/26234 (29.08.1996 Gazette 1996/39)**

# (54) SOLID POLYMER ELECTROLYTE, BATTERY AND SOLID-STATE ELECTRIC DOUBLE LAYER CAPACITOR USING THE SAME AS WELL AS PROCESSES FOR THE MANUFACTURE THEREOF

FESTPOLYMERELEKTROLYT, BATTERIE UND FESTKÖRPERDOPPELSCHICHTKONDENSATOR DIESEN VERWENDEND UND VERFAHREN ZU DEREN HERSTELLUNG

ELECTROLYTE POLYMERE SOLIDE, PILE ET CONDENSATEUR ELECTRIQUE A DOUBLE COUCHE SOUDE UTILISANT CET ELECTROLYTE ET PROCEDES DE FABRICATION

(84) Designated Contracting States:
**AT BE CH DE DK ES FR GB GR IE IT LI LU MC NL PT SE**

(30) Priority: **21.02.1995 JP 5651495**
**04.07.1995 JP 19117795**

(43) Date of publication of application:
**10.12.1997 Bulletin 1997/50**

(73) Proprietor: **SHOWA DENKO KABUSHIKI KAISHA**
**Minato-ku, Tokyo 105-0011 (JP)**

(72) Inventors:
- **TAKEUCHI, Masataka, Showa Denko K.K.**
**Chiba-shi, Chiba 267 (JP)**
- **OOGA, Kazuhiko, Showa Denko K.K.**
**Chiba-shi, Chiba 267 (JP)**

(74) Representative: **Strehl Schübel-Hopf & Partner**
**Maximilianstrasse 54**
**80538 München (DE)**

(56) References cited:
**EP-A- 0 576 686**
**WO-A-94/29884**
**AU-A- 547 109**
**GB-A- 2 202 848**

- **DATABASE WPI Derwent Publications Ltd., London, GB; AN 94-257956(32) XP002007079 & JP,A,06 187 822 (SHOWA DENKO KK) , 8 July 1994 cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 811 029 B1

Printed by Jouve, 75001 PARIS (FR)

## Description

### Technical Field

The present invention relates to a solid polymer electrolyte having high ionic conductivity which comprises a composite of (i) a new polymer synthesized from a monomer mixture comprising oxyalkylene derivatives of a polyhydric alcohol having three or more hydroxyl groups that contain urethane bond and (ii) an electrolyte salt; an electrode comprising such a polymer and a process for manufacturing the same; a battery comprising such a solid polymer electrolyte or such electrodes and a process for manufacturing the same; and an electric double layer capacitor using such a solid polymer electrolyte and a process for manufacturing the same.

### Background Art

In the field of ionics, there is a trend of down-sizing as well as making it to be of the solid-state type, and efforts are being made extensively with view to application, to solid-state primary or secondary batteries and electric double layer capacitors, of solid electrolytes as a new ionic conductor which replaces conventional electrolyte solutions. Conventional products such as batteries with electrolyte solutions have problems in long-term reliability since there tends to occur leakage of the electrolyte solution out of the parts or elution of the electrode substance. On the contrary, products with solid electrolytes do not cause such problems and it is easy to make their thickness smaller. Furthermore, solid electrolytes are excellent in thermal resistance and advantageous in the manufacturing process of products such as battery.

Among batteries using a solid electrolyte, those using a polymer as a main component of the electrolyte have a merit of increased flexibility as compared with those using an inorganic substance, which endows the former with processability into various forms. However, such products as hitherto studied still suffer from a problem that only a small amount of current can be taken out since the solid polymer electrolyte has a low ionic conductivity.

As an example of such solid polymer electrolyte, it is described in British Polymer Journal (Br. Polym. J., vol. 319, page 137, (1975)) that a compounded material consisting of a polyethylene oxide and an inorganic alkali metal salt exhibits ionic conductivity, which is, however, as low as $10^{-7}$ S/cm at room temperature.

Recently, there have been many reports that a comb-shaped polymer having an oligooxyethylene in its side chain has an improved ionic conductivity due to increased thermal motion of the oxyethylene chain which contributes ionic conductivity. An example in which polymethacrylic acid with oligooxyethylene being added to its side chain is compounded with an alkali metal salt is described in Journal of Physical Chemistry (J. Phys. Chem.), vol. 89, page 987 (1984). Another example in which polyphosphazene with an oligooxyethylene side chain is compounded with an alkali metal salt is described in Journal of American Chemical Society (J. Am. Chem. Soc.), vol. 106, page 6854 (1984).

US Patent No.4,357,401 discloses a solid polymer electrolyte using a cross-linked polymer but the ionic conductivity of this solid polymer electrolyte is still unsatisfactory even at an elevated temperature, i.e. as low as $10^{-4}$ to $10^{-5}$ S/cm at 50°C.

US Patent No.4,792,504 proposes another solid polymer electrolyte which comprises continuous network of polyethylene oxide impregnated with an electrolyte solution consisting of a metal salt and an aprotic solvent. This solid electrolyte is, however, hard to be made into a film having sufficient strength and its ionic conductivity is still unsatisfactory due to the structure of cross-linking agent.

Recently, many studies have been made on lithium secondary batteries in which metal oxides or metal sulfides such as $LiCoO_2$, $LiNiO_2$, $LiMnO_2$, $MoS_2$ and the like are used as positive electrode. For example, batteries using positive electrode made of $MnO_2$ or $NiO_2$ are reported in Journal of Electrochemical Society (J. Electrochem. Soc.), vol. 138 (No. 3), page 665 (1991). These batteries have drawn attention since they have high gravimetric or volumetric capacity.

Also, many reports have been made on batteries using electroconductive polymer as electroactive material. For example, lithium secondary battery using polyanilines as positive electrode has already been put on the market in the form of a coin type battery for use as a backup source by Bridgestone Co., Ltd. and Seiko Co., Ltd. as reported in, for example, "The 27th Symposium on Battery, 3A05L and 3A06L" (1986). Polyaniline also attracts attention as an electroactive material for positive electrode having a high capacity and flexibility.

Lately, electric double layer capacitors which comprise polarizable electrodes made of a carbon material having a large specific surface area such as activated carbon, carb6n black or the like and an ionic conducting solution arranged between the electrodes have been widely used for a memory backup source. For example, a capacitor having carbon-based polarizable electrodes and an organic electrolyte solution is described in "Kinou Zairyo", February 1989, page 33. An electric double layer capacitor using an aqueous sulfuric acid solution is described in "The 173rd Electrochemical Society Meeting Atlanta Georgia", May, No.18 (1988). Also, a capacitor using highly electroconductive $Rb_2Cu_3I_3Cl_7$ as an inorganic solid electrolyte is disclosed in Japanese Patent Application Laid-open No. 63-244570

(1988).

However, electric double layer capacitors using conventional electrolyte solutions have problems in long-term use and reliability since there tends to occur leakage of the solution out of the capacitor when used for a long time or when a high voltage is applied to. On the other hand, electric double layer capacitors using conventional inorganic based ionic conducting substances have a problem that the ionic conducting substance decomposes even at a low voltage and, hence, the output voltage is low.

The use of an ionic conducting substance using a polyphosphazene based polymer for a battery or a capacitor is disclosed in Japanese Patent Application Laid-open No. 4-253771 (1992). The capacitor using such an ionic conducting substance containing this polymer as the main component has various merits that it has an output voltage higher than the inorganic substance based ionic conducting substance, can be processed into various forms and is easy to be sealed. In this case, however, the ionic conductivity of the solid polymer electrolyte as low as $10^{-4}$ to $10^{-6}$ S/cm is still unsatisfactory and there is also a defect that the take-out current is small. Although it is possible to increase the ionic conductivity of the solid polymer electrolyte by the addition of a plasticizer, this gives fluidity to the electrolyte, which means that the electrolyte can no longer be treated as a complete solid. As a result, the film made of the polymer has a poor film strength and the polymer has a poor film formability and, hence, not only short-circuit tends to occur when the polymer is used in an electric double layer capacitor or a battery but also there arises a difficulty in sealing as in the case of the liquid ionic conducting substances. In addition, when it is assembled with a polarizable electrode such as a carbon material to produce a capacitor, there arises a problem of homogeneously compounding the solid polymer electrolyte with a carbon material having a large specific surface area since the both materials are solid and hard to be homogeneously compounded.

The ionic conductivity of solid polymer electrolytes studied so far has been improved up to about $10^{-4}$ to $10^{-5}$ S/cm at room temperature, which is, however, by over two digits lower than that of the liquid ionic conducting substances. Besides, at a temperature no higher than 0°C, the ionic conductivity decreases drastically to a further lower level. Furthermore, when these solid electrolytes are incorporated in a device such as an electric double layer capacitor or incorporated in a battery in the form of a thin film, there arises difficulties in the manufacturing process since the solid electrolyte is hard to be compounded with the electrode and it is difficult to achieve a satisfactory contact between the electrolyte and the electrode.

In order to solve these problems, the present inventors proposed an ionic conducting solid polymer electrolyte which is a composite of a polymer produced from a mixture of (meth)acrylate monomers comprising oxyalkylene derivatives containing urethane bond and an electrolyte salt in Japanese Patent Application Laid-open No. 6-187822 (1994). This solid polymer electrolyte has improved inonic condutivity as high as $10^{-3}$ S/cm at or below room temperature. However, thin films formed of this solid electrolyte having a thickness less than 10 μm have poor film strength and tend to occur short circuit when used for an electric double layer capacitor or a battery.

Since the solid polymer electrolyte layer in a battery or a capacitor relates to ionic mobility, the energy density thereof will be improved by making the layer thinner so that the volume of a battery or capacitor may be made smaller. Furthermore, as the polymer elelectrolyte layer is made thinner, electric resistance in a battery or a capacitor decreases, which increases take-out current or charge current therefrom and improves power density thereof.

Such an electrolyte also reduces ionic corrosion and occurrence of short-circuit and improves cycle life of a secondary battery and a capacitor.

Accordingly, solid polymer electrolytes which can be formed into a thin film and exhibit as good film strength as possible are desired.

Object of the Invention

It is an object of the present invention to provide a solid polymer electrolyte which can be molded into a free-standing film having thickness of even 50μm or less, especially into a thin film below 10 μm thickness which has good strength sufficient for use in a battery or an electric double layer capacitor and high ionic conductivity at room temperature as well as at low temperatures and is excellent in processability.

It is also an object of the present invention to provide, using such a solid polymer electrolyte, primary and secondary batteries which are easy to be made in the form of a thin film, can operate at high capacity and at high voltage, and further have good cyclability and good reliability and a process for manufacturing the same.

Also, it is an object of the present invention to provide an electrode having high electrochemical activity and flexibility as well as to provide secondary batteries using the same.

Another object of the present invention is to provide an electrode usable in electric double layer capacitors which has good polarizability, good strength when formed into a film and good contactibility with solid electrolyte and a process for manufacturing the same.

Further another object of the present invention is to provide an electric double layer capacitor which gives a high output voltage, a high take-out current, and is excellent in processability and reliability utilizing a solid polymer

electrolyte which has high ionic conductivity at room temperature as well as at lower temperatures, and is excellent in film strength and processability and a process for manufacturing the same.

Summary of the Invention

The present inventors have found that a solid polymer electrolyte comprising a composite of (a) a polymer containing as a component an oxyalkylene derivative of a polyhydric alcohol having three or more hydroxyl groups that contains urethane bonds and (b) an electrolyte salt exhibits good film strength and is useful as a solid polymer electrolyte having high ionic conductivity. Here and through the description of this specification, the term "oxyalkyl" includes oligooxyalkylene and polyoxyalkylene, each containing at least one oxyalkylene group.

Further, the present inventors have found that the use of the above solid polymer electrolyte in batteries improves ionic conductivity, film strength, processability, etc., solving the above-mentioned problems of the conventional art.

The present inventors have investigated considering that it is important to provide the electrode in the form of a thin film when, for example, fabricating a thin solid-state battery using such a solid polymer electrolyte, forwarded investigation and found that the use of electroconductive polyaniline and its derivatives which are excellent electroactive substances, specifically, polyaniline or its derivatives soluble in organic solvents or other electroconductive polymers, metal oxides, metal sulfides, carbon materials or other electroactive substances (positive electrode materials or negative electrode materials) in combination with a polymer which has an oxyalkyl side chain containing urethane bond makes it possible to form an electrode having high electrochemical activity and flexibility without deteriorating the electrochemical activity of the above electroactive substances and furthermore it enables manufacturing of electrode in the form of a thin film by solvent cast method or other suitable method.

Still further, the present inventors have found that the use of such carbon materials as will be mentioned later, which can be used as a polarizable electrode in an electric double layer capacitor, in combination with a polymer which has an oxyalkyl side chain containing urethane bond makes it possible to form a polarizable electrode suitable for the use of such a capacitor without deteriorating the polarizability of the above polarizable materials and furthermore it enables manufacturing of electrode in the form of thin film by solvent cast method or other suitable method.

Still further, the present inventors have found that the use of the above-mentioned solid polymer electrolyte gives rise to an electric double layer capacitor which has a high output voltage and a high take-out current, and is excellent in processability and reliability, and inter alia enables manufacturing of a whole solid-state electric double layer capacitor.

In order to achieve the above-described objects, the present invention provides solid polymer electrolytes, batteries using such a solid polymer electrolyte, process for manufacturing such a battery, electrodes, electric double layer capacitors, process for manufacturing such an electric double layer capacitor, each of which will be described below :

1) A solid polymer electrolyte comprising a composite of:

(a) a polymer obtainable from at least one compound which contains a structure derived from a polyhydric alcohol having three or more hydroxyl groups, at least two hydrogen atoms of said alcoholic hydroxyl groups being each replaced by a unit represented by a general formula (1) below:

$$CH_2{=}C(R^1)C({=}O)[O(CH_2)_x(CH(CH_3))_y]_zNHC({=}O)OR^2\text{-} \qquad (1)$$

wherein $R^1$ represents a hydrogen or a methyl group; $R^2$ represents a divalent organic group containing at least one oxyalkylene group and the organic group may be linear, branched or cyclic and may contain one or more atoms other than carbon, hydrogen or oxygen, x and y each represents zero or a number of from 1 to 5; z represents zero or a numerical value of from 1 to 10, provided that z is zero when both of x and y are zero; the units of $(CH_2)$ and $(CH(CH_3))$ may be arranged irregularly in the unit of $[O(CH_2)_x(CH(CH_3))_y]_z$; provided that each of $R^1$, $R^2$, x, y, and z of each such unit in the compound may independently represent the above-mentioned atom, group, number, or value, respectively and is not necessary to be the same as such of the other said unit in the compound

and/or a copolymer comprising at least one of the above compounds as a comonomer (hereinafter, the above polymer and copolymer will be generally referred to as "(co)polymer"); and

(b) at least one electrolyte salt.

2) A solid polymer electrolyte described in above 1) wherein the (co)polymer comprises a polymer produced from a monomer mixture of

(A) at least one compound which has a structure derived from a polyhydric alcohol having three or more hydroxyl groups, at least two hydrogen atoms of said alcoholic hydroxyl groups being each replaced by a unit represented by the above general formula (1): 1 - 100 wt%;
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the electrolyte.
3) A solid polymer electrolyte comprising a composite of:

(a) a polymer obtainable from at least one compound which contains a structure derived from a polyhydric alcohol having three or more hydroxyl groups, at least two hydrogen atoms of said alcoholic hydroxyl groups being each replaced by a unit represented by a general formula (2) below:

$$CH_2{=}C(R^1)C({=}O)[O(CH_2)_x(CH(CH_3))_y]_zNHC({=}O)(OR^3)_n\text{-} \quad (2)$$

wherein $R^1$ represents a hydrogen or a methyl group; $R^3$ each represents $-(CH_2)_2-$, $-CH(CH_3)CH_2-$ or $-CH_2CH(CH_3)-$; n represents a number not less than 1; x, y and z each means the same as defined in the above general formula (1)
and/or a copolymer comprising at least one of the above compounds as a comonomer and
(b) at least one electrolyte salt.

4) A solid polymer electrolyte described in above 3) wherein the (co)polymer comprises a polymer produced from a monomer mixture of

(A) at least one compound which has a structure derived from a polyhydric alcohol having three or more hydroxyl groups, at least two hydrogen atoms of said alcoholic hydroxyl groups being each replaced by a unit represented by the above general formula (2): 1 - 100 wt%;
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the electrolyte.
5) A solid polymer electrolyte described in any of above 1) to 4), wherein the electrolyte salt is at least one compound selected from a group consisting of an alkali metal salt, a quaternary ammonium salt, a quaternary phosphonium salt and a transition metal salt.
6) A solid polymer electrolyte described in any of 1) to 5), wherein the solid polymer electrolyte further contains a plasticizer.
7) A battery which comprises- the solid polymer electrolyte described in any of above 1) to 6).
8) A battery described in above 7) which comprises the negative electrode comprising lithium, lithium alloy or a carbon material which can occlude and discharge lithium ion.
9) A battery described in above 7) or 8) which comprises the positive electrode comprising an aniline-based polymer soluble in an organic solvent or other electroconductive polymer, a metal oxide, a metal sulfide or a carbon material.
10) A process for manufacturing a battery which comprises steps of placing a polymerizable monomer mixture in a frame for construction of a battery or on a support and polymerizing the polymerizable monomer mixture, wherein the mixture comprises at least one compound which has a structure derived from a polyhydric alcohol having three or more hydroxyl groups, at least two hydrogen atoms of said alcoholic hydroxyl groups being each replaced by a unit represented by the general formula (1), at least one electrolyte salt and optionally a plasticizer.
11) A process for manufacturing a battery described in above 10) wherein the (co)polymer of the solid polymer

electrolyte comprises a polymer produced from a monomer mixture of

(A) at least one compound which has a structure derived from a polyhydric alcohol having three or more hydroxyl groups, at least two hydrogen atoms of said alcoholic hydroxyl groups being each replaced by a unit represented by the above general formula (1): 1 - 100 wt%;
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the electrolyte.
12) A process for manufacturing a battery which comprises steps of placing a polymerizable monomer mixture as the solid polymer electrolyte in a frame for construction of a battery or on a support, and polymerizing the polymerizable monomer mixture, wherein the mixture comprises at least one compound which has a structure derived from a polyhydric alcohol having three or more hydroxyl groups, at least two hydrogen atoms of said alcoholic hydroxyl groups being each replaced by a unit represented by the above general formula (2) and at least one electrolyte salt and optionally a plasticizer,
13) A process for manufacturing a battery described in above 12) wherein the (co)polymer of the solid polymer electrolyte comprises a polymer produced from a monomer mixture of

(A) at least one compound which has a structure derived from a polyhydric alcohol having three or more hydroxyl groups, at least two hydrogen atoms of said alcoholic hydroxyl groups being each replaced by a unit represented by the above general formula (2): 1 - 100 wt%;
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the electrolyte.
14) An electrode which comprises a (co)polymer obtainable from (a) at least one compound which contains a structure derived from a polyhydric alcohol having three or more hydroxyl groups, at least two hydrogen atoms of said alcoholic hydroxyl groups being each replaced by a unit represented by the above general formula (1) and (b) an electroactive substance or polarizable material.
15) An electrode described in above 14) wherein the (co)polymer for manufacturing an electrode comprises a polymer produced from a monomer mixture of

(A) at least one compound which has a structure derived from a polyhydric alcohol having three or more hydroxyl groups, at least two hydrogen atoms of said alcoholic hydroxyl groups being each replaced by a unit represented by the above general formula (1): 1 - 100 wt%;
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the electrode.
16) An electrode which comprises a (co)polymer obtainable from (a) at least one compound which contains a structure derived from a polyhydric alcohol having three or more hydroxyl groups, at least two hydrogen atoms of said alcoholic hydroxyl groups being each replaced by a unit represented by the above general formula (2) and (b) an electroactive substance or polarizable material.
17) An electrode described in above 16) wherein the (co)polymer comprises a polymer produced from a monomer mixture of

(A) at least one compound which has a structure derived from a polyhydric alcohol having three or more hydroxyl groups, at least two hydrogen atoms of said alcoholic hydroxyl groups being each replaced by a unit represented by the above general formula (2): 1 - 100 wt%;

(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the electrode.
18) An electrode described in any of above 14) to 17) in which the electroactive substance or polarizable material comprises an aniline-based polymer soluble in an organic solvent or other electroconductive polymer, a metal oxide, a metal sulfide or a carbon material.
19) An electric double layer capacitor comprising polarizable electrodes and an ionic conducting substance arranged between the electrodes, wherein the ionic conducting substance comprises the solid polymer electrolyte described in any of above 1) to 6).
20) An electric double layer capacitor comprising polarizable electrodes and an ionic conducting substance arranged between the electrodes, wherein the polarizable electrodes comprise a composite of:

(a) a (co)polymer obtainable from at least one compound which contains a structure derived from a polyhydric alcohol having three or more hydroxyl grbups, at least two hydrogen atoms of said alcoholic hydroxyl groups being each replaced by a unit represented by the above general formula (1) and
(b) a carbon material.

21) An electric double layer capacitor described in above 20) wherein the (co)polymer of the composite comprises a polymer produced from a monomer mixture of

(A) at least one compound which has a structure derived from a polyhydric alcohol having three or more hydroxyl groups, at least two hydrogen atoms of said alcoholic hydroxyl groups being each replaced by a unit represented by the above general formula (1): 1 - 100 wt%;
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the composite.
22) An electric double layer capacitor comprising polarizable electrodes and an ionic conducting substance arranged between the electrodes, wherein the polarizable electrodes comprise a composite of:

(a) a (co)polymer obtainable from at least one compound which contains a structure derived from a polyhydric alcohol having three or more hydroxyl groups, at least two hydrogen atoms of said alcoholic hydroxyl groups being each replaced by a unit represented by the above general formula (2) and
(b) a carbon material.

23) An electric double layer capacitor described in above 22) wherein the (co)polymer of the composite comprises a polymer produced from a monomer mixture of

(A) at least one compound which has a structure derived from a polyhydric alcohol having three or more hydroxyl groups, at least two hydrogen atoms of said alcoholic hydroxyl groups being each replaced by a unit represented by the above general formula (2): 1 - 100 wt%;
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the composite.
24) A process for manufacturing an electric double layer capacitor which comprises steps of placing a polymerizable monomer mixture in a frame for construction of an electric double layer capacitor or on a support and polymerizing the polymerizable monomer mixture, wherein the mixture comprises (a) at least one compound which contains a

structure derived from a polyhydric alcohol having three or more hydroxyl groups, at least two hydrogen atoms of said alcoholic hydroxyl groups being each replaced by a unit represented by the above general formula (1) and (b) at least one electrolyte salt and optionally a plasticizer.
25) A process for manufacturing an electric double layer capacitor described in above 24),said process comprising steps of placing a polymerizable monomer mixture in a frame for construction of an electric double layer capacitor or on a support and polymerizing the polymerizable monomer mixture, wherein the mixture comprises

(A) at least one compound which has a structure derived from a polyhydric alcohol having three or more hydroxyl groups, at least two hydrogen atoms of said alcoholic hydroxyl groups being each replaced by a unit represented by the above general formula (1) 1 - 100 wt%,
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 wt%

provided that the total amount of (A) and (B) is not less than 20 wt% of the total amount of (A), (B) and (C), said polymer being contained in an amount of not less than 50 wt% of the total polymer used in the composite.
26) A process for manufacturing an electric double layer capacitor which comprises steps of placing a polymerizable monomer mixture in a frame for construction of an electric double layer capacitor or on a support, and polymerizing the polymerizable monomer mixture, wherein the mixture comprises (a) at least one compound which contains a structure derived from a polyhydric alcohol having three or more hydroxyl groups, at least two hydrogen atoms of said alcoholic hydroxyl groups being each replaced by a unit represented by the above general formula (2-) and (b) at least one electrolyte salt and optionally a plasticizer.
27) A process for manufacturing an electric double layer capacitor described in above 26), said process comprising steps of placing a polymerizable monomer mixture in a frame for construction of an electric double layer capacitor or on a support and polymerizing the polymerizable monomer mixture, wherein the mixture comprises

(A) at least one compound which has a structure derived from a polyhydric alcohol having three or more hydroxyl groups, at least two hydrogen atoms of said alcoholic hydroxyl groups being each replaced by a unit represented by the above general formula (2): 1 - 100 wt%;
(B) at least one compound which contains one unit represented by the above general formula (1) per molecule and no ethylenically unsaturated groups in the rest of the molecule: 0 - 95 wt%; and
(C) at least one compound containing an ethylenically unsaturated group and differing from (A) and (B): 0 - 80 Wt%

provided that the total amount of (A) and (B) is not less than 20 wt% of the total amount of (A), (B) and (C), said polymer being contained in an amount of not less than 50 wt% of the total polymer used in the composite.

Brief Description of the Drawing

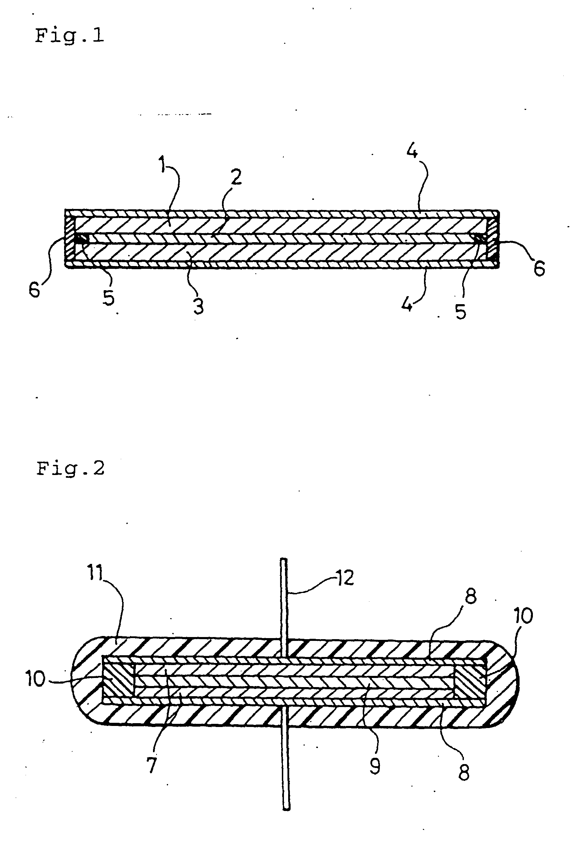

Fig. 1 is a schematic cross-sectional view showing an example of a thin solid-state battery according to the present invention. In the figure, 1 is a positive electrode, 2 is a solid polymer electrolyte, 3 is a negative electrode, each of 4 is a collector, 5 is an insulating spacer and 6 is an insulating resin sealing; and
Fig. 2 is a schematic cross-sectional view showing an example of a solid-state electric double layer capacitor according to the present invention, wherein a pair of polarizable electrodes 7 is arranged between the two collectors 8. Solid polymer electrolyte film 9 is arranged between these electrodes. 10 is an insulating spacer, 11 is an insulating resin sealing and 12 is a lead wire.

Detailed Description of the Invention

Hereinafter, the construction and fabrication process of solid electrolytes, batteries, electrodes, solid-state electric double layer capacitors of the present invention will be described in more detail.

<u>Solid electrolyte</u>

The solid polymer electrolyte of the present invention comprises a composite of:

(a) a polymer obtainable from at least one compound which contains a structure derived from a polyhydric alcohol having three or more hydroxyl groups, at least two hydrogen atoms of said alcoholic hydroxyl groups being each replaced by a unit represented by a general formula (1) below:

$$CH_2{=}C(R^1)C({=}O)\ [O(CH_2)_x(CH(CH_3))_y)_zNHC({=}O)OR^2\text{-} \quad (1)$$

and/or a copolymer comprising at least one of the above compounds as a comonomer as mentioned above (the above polymer and copolymer will be generally referred to as "(co)polymer"); and

(b) at least one electrolyte salt.

$R^1$ in the above formula (1) represents a hydrogen or a methyl group.

$R^2$ represents a divalent organic group containing at least one oxyalkylene group. The organic group may be linear, branched or cyclic and may contain one or more atoms other than carbon, hydrogen or oxygen.

Each of $R^1$ and $R^2$ of each such unit represented by the above general formula (1) contained in the compound independently represents the above-mentioned group and is not necessary to be the same as such of the other said unit in the compound.

X and y each represents zero or a number of from 1 to 5; z represents zero or a numerical value of from 1 to 10, provided that z is zero when both of x and y are zero; the units of $(CH_2)$ and $(CH(CH_3))$ may be arranged irregularly in the unit of $[O(CH_2)_x(CH(CH_3))_y]_z$.

Examples of preferred combination of x, y and z include:

(a) x is 0 or 1, y is 0 or 1 and z is 0 or 1 (provided that z is 0 when x is 0 and y is 0)
(b) x is 2 to 5, y is 0 and z is 1 to 10;
(c) x is 1 to 5, y is 1 to 5 (random arrangement) and z is 1 to 10; or
(d) x is 0, y is 1 to 5 and z is 1 to 10.

As will be described below, isocyanate:

$$CH_2{=}C(R^1)C({=}O)[O(CH_2)_x(CH(CH_3))_y]_zNCO$$

is used for introducing the unit represented by the above formula (1) into the polyhydric alcohol and in the case (a), corresponding compounds are highly reactive and ready to react with various kinds of oxyalkylene compounds and also that they are liquid having low viscosity, which is convenient for the reaction in a liquid system.

In cases (b) through (d), corresponding compounds have low polymerizability so that they have good storage stability and are good in handling as a polimerizable monomer. Especially in cases of (c) or (d), introduction of oxypropylene group gives rise to the compounds which have lower dielectric constant than that of compound having oxyethylene group, but such compounds are very useful for some applications since their melting point and viscosity do not increase so much as the value z increases.

As mentioned above, each of x, y and z of each such unit represented by the general formula (1) in a compound may be independent from each other. Accordingly, solid polymer electrolytes having desired properties suitable for specific applications can be prepared by suitably using these polymerizable monomers in combination with each other or using these monomers along with other polymerizable monomers or polymers, making use of the properties of these compounds.

The hydrogen atom of the alcoholic hydroxyl group of the polyhydric alcoholic structural unit, which is not replaced by a unit represented by the aforementioned general formula (1), in the compound as used in the present invention may preferably be replaced by an organic chain such as alkyl group, or alkyl group containing at least one oxyalkylene group. The organic chain may be a linear, branched or cyclic, saturated or unsaturated and may contain one or more atoms other than carbon, hydrogen or oxygen. Such organic chains, for example, include a $C_1 \sim C_{20}$ linear or branched, saturated or unsaturated alkyl or alicyclic group, methoxymethyl, methoxyethyl, ethoxyethyl, propoxypropyl, or other alkoxy-oligoalkyleneoxyalkyl group, phenyl group, and $C_1 \sim C_{20}$-alkyl-substituted phenyl group.

All or a part of the unit represented by the general formula (1) may be a unit represented by the general formula(2):

$$CH_2{=}C(R^1)C({=}O)[O(CH_2)_x(CH(CH_3))_y]_zNHC\ ({=}O)\ (OR^3)_n\text{-} \quad (2)$$

wherein $R^1$ represents a hydrogen or a methyl group; $R^3$ each represents - $(CH_2)_2$-, $-CH(CH_3)CH_2$-or $-CH_3CH(CH_3)$-; n is a number not less than 1 and x, y and z each means the same as in the general formula (1).

Compounds having a structure containing the unit represented by the formula (2) provide a solid polymer electrolyte of good film strength when formed into a thin film. Furthermore, this unit is useful to introduce more oxyalkylene groups into the objective polymer, which results in higher ionic conductivity at or below room temperature.

At least one monomer used for synthesizing the solid polymer electrolyte of the present invention must contain a compound which have a structure derived from a polyhydric alcohol having three or more hydroxyl groups, at least two hydrogen atoms of said alcoholic hydroxyl groups being each replaced by a unit represented by the above general formula (1). Although a polymer synthesized from monomers each of which contain only one unit represented by the general formula (1) may be incorporated with an electrolyte salt to form a solid polymer electrolyte, the thus obtained solid polymer electrolyte may cause short-circuit due to its poor film strength when it is molded into a film having a thickness less than 10 μm for the use in a battery. Three or more units represented-by the general formula (1) are preferably contained in a molecule.

Monomers used for synthesizing the polymer component of the present solid polymer electrolyte can be obtained, for example, by reacting $CH_2=C(R^1)C(=O)[O(CH_2)_x(CH(CH_3))_y]_zNCO$, wherein $R^1$, x, y and z each means the same as defined in the general formula (1), with a polyhydric alcohol having three or more hydroxyl groups and at least one oxyalkylene group.

Specifically, a compound derived from a polyhydric alcohol having three or more hydroxyl groups, two hydrogen atoms of said alcoholic hydroxyl groups being each replaced by a unit represented by the general formula (1) can be readily obtained, for example, by reacting two moles of methacryloylisocyanate compound (hereinafter referred to as "MI" for short) or acryloylisocyanate compound (hereinafter referred to as "AI" for short) with one mole of a diol that is a derivative of a triol obtained by addition polymerization of alkylene oxide with glycerol, wherein one hydroxyl group of the triol is capped with methoxy group.

A compound derived from a polyhydric alcohol having three or more hydroxyl groups, three hydrogen atoms of said alcoholic hydroxyl groups being each replaced by a unit represented by the general formula (1) can be readily obtained, for example, by reacting three moles of MI or AI with one mole of a triol obtained by addition polymerization of alkylene oxide with glycerol or other alcohols having three hydroxyl groups.

A compound derived from a polyhydric alcohol having at least four hydroxyl groups wherein four hydrogen atoms of the alcoholic hydroxyl groups are each replaced by a unit represented by the general formula (1) can be readily obtained, for example, by reacting four moles of MI or AI with one mole of a tetraol obtained by addition polymerization of alkylene oxide with pentaerythritol or other alcohols having four hydroxyl groups.

A compound derived from a polyhydric alcohol having at least five hydroxyl groups wherein five hydrogen atoms of the alcoholic hydroxyl groups are each replaced by a unit represented by the general formula (1) can be readily obtained, for example, by reacting five moles of MI or AI with one mole of a pentaol obtained by addition polymerization of alkylene oxide with α-D-glucopyranose.

A compound derived from a polyhydric alcohol having at least six hydroxyl groups wherein six hydrogen atoms of the alcoholic hydroxyl groups are each replaced by a unit represented by the general formula (1) can be readily obtained, for example, by reacting six moles of MI or AI with one mole of a hexaol obtained by addition polymerization of alkylene oxide with mannitol.

Hereinafter, we will refer to a compound which satisfies the condition: "one compound which has structure derived from a polyhydric alcohol having three or more hydroxyl groups, at least two hydrogen atoms of said alcoholic hydroxyl groups being each replaced by a unit represented by the aforementioned general formula (1)" as a "PUX" compound. Similarly, a compound which has struture derived from a polyhydric alcohol having three or more hydroxyl groups, at least two hydrogen atoms of said alcoholic hydroxyl groups being each replaced by a unit represented by the general formula (2) will be hereinafter referred to as a "PUY" compound. Since all or a part of the unit represented by the general formula (1) may be a unit represented by the general formula (2), a PUX compound includes a PUY compound.

The polymer comprised by the solid polymer electrolyte of the present invention can be obtained by polymerizing at least one PUX or PUY compound or performing polymerization using a PUX or PUY compound as a comonomer.

Compounds which are used in the copolymerization reaction with a PUX or PUY compound are not limited.

Examples of such compounds include compounds which have one unit represented by the general formula (1) per molecule and do not have any ethylenically unsaturated group in the rest of the molecule (hereinafter referred to as monofunctional urethane(meth)acrylate having oxyalkylene chain) such as N-methacryloylcarbamic acid ω-methyloligooxyethyl ester and methacryloyloxyethylcarbamic acid ω-methyloligooxyethyl ester, monofunctional (meth) acrylesters having oxyalkylene chain such as methacrylic acid ω-methyloligooxyethyl ester, (meth)acrylic acid esters such as methyl methacrylate and n-butyl acrylate, (meth)acrylamide compounds such as acrylamide, methacrylamide, N,N-dimethylacrylamide, N,N-dimethylmethacrylamide, acryloylmorpholine, methacryloylmorpholine and N,N-dimethylaminopropyl(meth)acrylamide, styrene compounds such as styrene and α-methylstyrene, N-vinylamides such as N-vinylacetamide and N-vinylformamide, alkylvinylethers such as ethylvinylether, etc. Among these compounds, monofunctional urethane(meth)acrylate having oxyalkylene chain, monofunctional (meth)acrylesters having oxyalkylene chain and (meth)acrylamide compounds are preferably used. Most preferred is monofunctional urethane(meth)acrylate having oxyalkylene chain since such a compound can introduce more urethane or oxyalkylene groups into the polymer.

For polymerization, there can be adopted general methods which utilize polymerizability of the acryloyl or methacryloyl group of a PUX or PUY compound or the above-mentioned compounds. That is, a PUX or PUY compound or a polymerizable mixture of a PUX or PUY compound and at least one compound selected from the above-mentioned compounds is radically, anionically or cationically polymerized using a radical polymerization catalyst such as azobisisobutyronitrile, benzoyl peroxide, etc., a cationic polymerization catalyst such as a protonic acid such as $CF_3COOH$, etc., Lewis acids such as BF3, $AlCl_3$ and the like, or an anionic polymerization catalyst such as butyllithium, sodium naphthalene, lithium alkoxide and the like respectively. In case that the total amount of the PUX or PUY compound and the monofunctional urethane(meth)acrylate having oxyalkylene chain exceeds 20 % by weight of the total amount of monomers, polymerization can be effected merely-by heating the monomer mixture at or higher than 70°C in the absence of oxygen.

Polymerization can also be performed after forming the monomer mixture which comprises a PUX or PUY compound or a polymerizable mixture of a PUX or PUY compound and the above-mentioned compounds into a shaped article such as a film or the like. In case that a polymer synthesized from at least one PUX or PUY compound or a copolymer in which a PUX or PUY compound is used as a comonomer is used in a solid polymer electrolyte as in the present invention, it is particularly advantageous to polymerize such a monomer mixture after the film formation.

That is, at least one PUX or PUY compound and at least one electrolyte salt such as an alkali metal salt, a quaternary ammonium salt, a quaternary phosphonium salt or a transition metal salt, with or without optionally adding thereto (i) further another polymerizable compound and/or (ii) a plasticizer and/or (iii) a solvent, are mixed together, and then the resulting polymerizable monomer mixture is polymerized in the presence of or in the absence of such a catalyst as described above, optionally with heat and/or electromagnetic radiation such as light to form a polymer. Especially, there can be obtained a wider freedom in processing, thus giving a great merit in application by such a process as comprising forming the polymerizable monomer mixture into a shaped article such as a film, plate, disk or fiber and then polymerizing the same, for example, with heat and/or electromagnetic radiation such as light to give a polymer film, plate, disk or fiber.

Any solvent that does not hinder the polymerization may be used, depending on the kind of the monomer used and the presence of a catalyst. An example of the usable solvent includes tetrahydrofuran, acetonitrile, toluene, etc.

The polymerization temperature may vary as far as it may suffice to effect polymerization reaction. It depends on the kind of the PUX or PUY compound used and usually a temperature of 0 to 200°C is employed. Though, the conditions of polymerization with electromagnetic radiation may vary depending on the kind of the PUX or PUY compound used, it is possible to perform polymerization with ultraviolet ray or γ ray of at least several mW using an initiator such as benzylmethylketal or benzophenone as an example.

A polymer used in a solid polymer electrolyte of the present invention may be, as mentioned above, a homopolymer of a PUX or PUY compound or a copolymer comprising at least two PUX or PUY compounds, or a copolymer comprising at least one PUX or PUY compound and at least one other polymerizable compound as mentioned above. The (co)polymer as defined in the above-described section of solid electrolyte includes any of said homopolymers and copolymers. The polymer to be used in a solid polymer electrolyte of the present invention may be also a mixture of such a polymer obtained from at least one PUX or PUY compound and/or a copolymer comprising at least one PUX or PUY compound and other polymers. For example, a mixture of such a polymer obtained from at least one PUX or PUY compound and/or a copolymer comprising at least one PUX or PUY compound and a polymer such as polyethylene oxide, polyacrylonitrile, polybutadiene, polymethacrylic (or polyacrylic) acid esters, polystyrenes, polyphosphazenes, polysiloxanes or polysilanes can be used in a solid polymer electrolyte of the present invention.

The amount of structural units derived from the PUX or PUY compound in the above copolymer or polymer mixture depends on the kind of the other component of the copolymer or the polymer mixture, and is preferably not lower than 20 %, more preferably not lower than 50 % by weight of the total amount of the copolymer or the polymer mixture comprised in a solid polymer electrolyte in consideration of the ionic conductivity and film strength, in case that no monofunctional urethane(meth)acrylate having oxyalkylene chain is contained as a comonomer.

In case that a monofunctional urethane(meth)acrylate having oxyalkylene chain is contained as a comonomer, the amount of structural units derived from the PUX or PUY compound is 1 to 100 %, preferably 10 to 100%, more preferably 20 to 100 % by weight of the total amount of the copolymer. When the amount of structural units derived from the PUX or PUY compound is less than 1 % by weight of the total amount of the copolymer, the film strength of the solid polymer electrolyte made thereof is significantly decreased and may result in short-circuit when used in a battery or electric double-layer capacitor as a thin film of not more than 50 μm. The amount of structural units derived

from the monofunctional urethane(meth)acrylate having oxyalkylene chain is not more than 95 %, preferably not more than 90 %, more preferably not more than 80 % by weight of the total amount of the copolymer. The total amount of structural units derived from the PUX or PUY compound and those derived from the monofunctional urethane(meth) acrylate having oxyalkylene chain is not less than 20 %, preferably not less than 50 % by weight of the total amount of the copolymer in consideration of the ionic conductivity and film strength of the solid polymer electrolyte made thereof.

The amount of the copolymer synthesized from the PUX or PUY compound is preferably not less than 50 % by weight of the total amount of the polymer mixture used in the solid polymer electrolyte.

When the amount of the structural units derived from the PUX or PUY compound falls in the above specified range, the polymer has sufficient film strength and high ionic conductivity when comprised in a solid polymer electrolyte.

The PUX or PUY compound comprised in the (co)polymer used for the production of solid polymer electrolyte of the present invention has two or more ethylenically unsaturated groups, and gives network polymer by polymerization. Accordingly, it is advantageous to mix said PUX or PUY compound with a compound containing one unit represented by the general formula (1) or (2) per molecule for polymerization, which endows the polymer with high thermal mobility and good film strength. The number of the oxyalkylene chains in the oxyalkylene groups which constitute side chains in the polymer or the number of oxyalkylene groups in $R^2$ in the general formula (1) (for example, the value of the number n in the general formula (2)) is preferably 1 to 1,000, more preferably 5 to 50.

An organic compound may preferably be added as a plasticizer in the solid polymer electrolyte of the present invention, which increases the ionic conductivity of the electrolyte. As the organic compound to be added, those compounds are suitable that have good compatibility with the monomers used for synthesizing the solid polymer electrolyte of the present invention, high dielectric constant, a boiling point of not lower than 100°C and good electrochemical stability. Examples of the plasticizer include oligoethers such as triethylene glycol methyl ether and tetraethylene glycol dimethyl ether, carbonates such as ethylene carbonate, propylene carbonate, diethyl carbonate and vinylene carbonate, aromatic nitriles such as benzonitrile and tolunitrile, dimethylformamide, dimethylsulfoxide, N-methylpyrrolidone, N-vinylpyrrolidone, sulfur compounds such as sulfolane, phosphoric acid esters, etc. Among these, oligoethers and carbonates are preferred, with carbonates being particularly preferred. Thus the term "plasticizers as described in this specification and the claims annexed thereto does not necessarily mean the material which is generally added to the other material to improve the plasticity of the latter.

The more the amount of the plasticizer added, the higher the ionic conductivity of the solid polymer electrolyte. However, if the amount of the plasticizer is too much, the mechanical strength of the solid polymer electrolyte decreases. Preferred amount of the plasticizer added is at most 5 times as much as the weight of the monomers used for producing the solid polymer electrolyte of the present invention. The amount of addition can be increased without decreasing the mechanical strength while improving the ionic conductivity by effecting copolymerization of a PUX compound with a polymerizable compound such as vinylene carbonate and N-vinylpyrrolidone in appropriate combination with non-polymerizable plasticizer.

Proportion of the electrolyte salt to be compounded with the polymer obtained from at least one PUX compound and/or a copolymer obtained from a PUX compound and other comonomer is preferably 1 molecule of electrolyte salt to 2 to 100 ether oxygen atoms in the side chain. "Molecule" of electrolyte salt as described in this specification means the unit chemical formula of the electrolyte salt. For example, one molecule of $LiBF_4$ means a pair of one $Li^+$ and $BF4^-$. If the electrolyte salt to be compounded exists in a proportion of more than 1/2 molecule with respect to an ether oxygen atom, migration of ions is significantly inhibited. On the contrary, the proportion of the electrolyte salt of not above 1/100 molecule is undesirable since the absolute amount of ions is insufficient and decreases the ionic conductivity. The above compounding ratio of the electrolyte salt is more preferably 1 molecule of electrolyte salt to 4 to 100 ether oxygen atoms in the side chain.

The kind of the electrolyte salt used for compounding is not limited particularly, and any electrolyte salt which contains the ion desired to be used as the carrier in the solid polymer electrolyte salt can be used. However, it is desirable that the dissociation constant of the electrolyte salt in the solid polymer electrolyte is large, and in this respect the electrolyte salts recommended are alkali metal salts, quaternary ammonium salts such as $(CH_3)_4NBF_4$, etc., quaternary phosphonium salts such as $(CH_3)_4PBF_4$, etc., transition metal salts such as $AgClO_4$, etc., or protonic acids such as hydrochloric acid, perchloric acid, tetrafluoroboric acid, etc.

As the electroactive substance for negative electrode used in the battery of the present invention, preferred are, as discussed later in this specification, those in which alkali metal ions function as the carrier and have low redox potential such as alkali metals, alkali metal alloys, carbon materials, etc. since high voltage, high capacity batteries can be obtained when they are used. Therefore, when applied to the batteries comprising such a negative electrode and the carrier of alkali metal ions, an alkali metal salt is required as the electrolyte salt in the solid polymer electrolyte. Examples of the alkali metal salt includes, for example, $LiCF_3SO_3$, $LiPF_6$, $LiClO_4$, LiI, $LiBF_4$, LiSCN, $LiAsF_6$, $NaCF_3SO_3$, $NaPF_6$, $NaClO_4$, NaI, $NaBF_4$, $NaAsF_6$, $KCF_3SO_3$, $KPF_6$, KI, etc. Among them, the most preferred alkali metal is lithium or lithium alloy since when it is used, there can be obtained a battery which has a high voltage and a high capacity and which can be formed into a thin film, plate or disk. In the case of a negative electrode comprising a carbon material,

there can be used not only alkali metal ions but also quaternary ammonium salts, quaternary phosphonium salts, transition metal salts, and various protonic acids.

In the case of a solid-state electric double layer capacitor, the kind of the electrolyte salt to be used for compounding therein is not limited particularly, and it is sufficient to use a compound which contains the ion desired to be used as the electric carrier. However, it is desirable that the compound contains ions which have a large dissociation constant in the solid polymer electrolyte and which readily form electric double layer on the surface of polarizable electrode. Examples of such a compound are quaternary ammonium salts such as $(CH_3)_4NBF_4$, $(CH_3CH_2)_4NClO_4$, etc., transition metal salts such as $AgClO_4$, etc., quaternary phosphonium salts such as $(CH_3)_4PBF_4$, alkali metal salts such as $LiCF_3SO_3$, $LiPF_6$, $LiClO_4$, LiI, $LiBF_4$, LiSCN, $LiAsF_6$, $NaCF_3SO_3$, $NaPF_6$, $NaClO_4$, NaI, $NaBF_4$, $NaAsF_6$, $KCF_3SO_3$, $KPF_6$, KI, etc., organic acids such as p-toluenesulfonic acid, etc., and salts thereof, inorganic acids such as hydrochloric acid, sulfuric acid, etc. Among them, quaternary ammonium salts, quaternary phosphonium salts and alkali metal salts are preferred in view of higher output voltage and larger dissociation constant. Among the quaternary ammonium salts, those having different substituent groups on the nitrogen in the ammonium ion such as $(CH_3CH_2)(CH_3CH_2CH_2CH_2)_3NBF_4$ are preferred in view of higher solubility in the compounding polymer and larger dissociation constant.

Battery and Electrode

For construction of a battery of the present invention, it is desirable to use, as the negative electrode, an electroactive substance (negative electrode material) in which alkali metal ions function as the carrier and having a low redox potential such as alkali metal, alkali metal alloy, and carbon materials since a high voltage, high capacity battery can be obtained. Among these electroactive substances, lithium metal or lithium alloys such as lithium/aluminum alloy, lithium/lead alloy, lithium/antimony alloy, etc. are particularly preferred since they have the lowest redox potential. Carbon materials are also particularly preferred for the reason that they have low redox potential when they occlude Li ion and that they are stable and safe. Examples of carbon materials which can occlude and discharge Li ion are natural graphite, synthesized graphite, carbon produced by vapor phase process, graphitized carbon produced therefrom, petroleum cokes, coal cokes, pitch carbon, polyacenes, fullerenes such as $C_{60}$ and $C_{70}$, etc.

For construction of a battery of the present invention, it is desirable to use, as the positive electrode, electroactive substance (positive electrode material) having a high redox potential such as metal oxides, metal sulfides, electroconductive polymers, or carbon materials, etc. since a high voltage, high capacity battery can be obtained. Among these electroactive substances, metal oxides such as cobalt oxide, manganese oxide, vanadium oxide, nickel oxide, molybdenum oxide, etc., metal sulfides such as molybdenum sulfide, titanium sulfide, vanadium sulfide, etc, are preferred in view of higher packing density and higher volumetric capacity, and particularly, manganese oxide, nickel oxide, cobalt oxide, etc. are preferred in view of a high voltage and high capacity.

Methods for preparing metal oxides or metal sulfides are not particularly limited and they may be prepared by conventional electrolytic process or heat process as described in "Denkikagaku", vol. 22, page 574 (1954), for example. When they are used as the electroactive substance in lithium batteries, it is preferred to make lithium atoms, in such a form as $Li_xCoO_2$, $Li_xMnO_2$, etc., inserted in or compounded with metal oxide or metal sulfide in the manufacturing process of batteries. Method for inserting Li atoms is not particularly limited and such an insertion may be performed by electrochemically inserting Li ions or by such a process as described in US PAT No. 4357215 in which a salt like $Li_2CO_3$, etc. is mixed with a metal oxide and then treated with heat.

Electroconductive polymers is one of the preferred positive electrode materials in view of flexibility and ease of making a thin film, plate, disk or fiber. Examples of such electroconductive polymers are aniline-based polymers such as polyaniline, polyacetylene and its derivatives, poly(p-phenylene), polypyrrole and its derivatives, polythienylene and its derivatives, polypyridinediyl and its derivatives, polyisothianaphthenylene and its derivatives, polyfurylene and its derivatives, polyselenophenylene and its derivatives, polyarylenevinylene and its derivatives such as poly(p-phenylenevinylene), polythienylenevinylene, polyfurylenevinylene, polynaphthylenevinylene, polyselenophenylenevinylene, polypyridinediylvinylene, etc., and its derivatives. Among them, an organic solvent-soluble aniline-based polymer is particularly preferred.

Electroconductive polymers used for electroactive substances in batteries or electrodes of the present invention are prepared by such chemical or electrochemical processes as described below or any other conventional process.

Examples of carbon materials include natural graphite, synthesized graphite, carbon produced by vapor phase process, graphitized carbon produced therefrom, petroleum cokes, coal cokes, fluorinated graphite, pitch carbon, polyacenes, fullerenes such as $C_{60}$ and $C_{70}$, etc.

Carbon materials used for electroactive substances in batteries or electrodes of the present invention may be those commercially available or prepared by any conventional process.

An organic solvent-soluble aniline-based polymer which is preferably used as the electroactive substance of the battery or electrode of the present invention is advantageous in that molding can be performed by solution coating

and especially advantageous in the fabrication of thin film batteries. Examples of the aniline-based polymers (polyaniline or its derivatives) include polyaniline, poly-o-toluidine, poly-m-toluidine, poly-o-anisidine, poly-m-anisidine, polyxylidines, poly-2,5-dimethoxyaniline, poly-2,6-dimethoxyaniline, poly-2,5-diethoxyaniline, poly-2,6-diethoxyaniline, poly-o-ethoxyaniline, poly-m-ethoxyaniline, and copolymers comprising such a monomeric unit as contained in these polymers. However, the present invention is not limited thereto and any polymer containing a repeating unit derived from aniline or its derivatives can be used. The larger the amount of the side chain of the organic solvent-soluble aniline-based polymer, the more convenient in view of higher solubility while as the amount of the side chain increases, but there appears an adverse effect that the gravimetric capacity of the positive electrode gets smaller. Therefore, examples of preferred aniline-based polymers include polyaniline, poly-o-toluidine, poly-m-toluidine, poly-o-anisidine, poly-m-anisidine, polyxylidines, etc.

While the polymerization method for producing polyaniline or its derivatives to be adopted in the present invention is not limited particularly, generally there is used a method in which an aniline or aniline derivative such as o-anisidine or the like is subjected to oxidative polymerization electrochemically or chemically, as reported by, for example, A.G. MacDiarmid, et al., in Journal of Chemical Society, Chemical Communication, page 1784 (1987).

The molecular weight of the thus obtained aniline-based polymer used in the present invention is not limited particularly, but usually an aniline-based polymer having a molecular weight of at least 2,000 is preferred.

Also, the aniline-based polymer obtained in such a manner as above mostly contains the anions, as a dopant, which are present in the polymerization solution. This is disadvantageous in view of solubility and gravimetric capacity of the polymer. Therefore, it is preferred to undope the anions and further convert the aniline-based polymer into the reduced type before it is processed into an electrode, for example, by the film-, plate-, or disk- forming method. While there is no particular limitation in the method of undoping, usually a method is adopted in which the aniline-based polymer is treated with a base such as aqueous ammonia or sodium hydroxide. Also, there is no particular limitation in the manner of reduction. It is sufficient to perform common chemical or electrochemical reduction. For example, in the case of chemical reduction, reduction can be performed readily by dipping or stirring the aniline-based polymer treated with a base (i.e. the undoped aniline-based polymer) in a hydrazine or phenylhydrazine solution at room temperature.

The undoped or reduced type aniline-based polymer thus obtained is soluble in various organic solvents, and can be mixed in a state of solution with a polymerizable monomer solution comprising at least one PUX or PUY compound. The thus prepared mixture can be formed into a thin film, plate or disk, for example, by applying the mixture on various supports such as an electrode, a metal plate and a glass plate, or molded into any other form, e.g., fiber, whereby an electrode can be manufactured.

Solvents in which these aniline-based polymers are dissolved may vary depending on the kind of the substituent groups on the benzene rings of the aniline-based polymers and are not limited particularly. Generally, pyrrolidones such as N-methylpyrrolidone, amides such as dimethylformamide, polar solvents such as m-cresol, or dimethyl propylene urea, etc. are good solvents.

Next, an example for the manufacturing process of an electrode and a battery of the present invention will be explained in detail.

For example, at least one PUX or PUY compound is mixed with an electroactive substance. (positive electrode material or negative electrode material) mentioned above, with or without an optionally-added above-mentioned other polymerizable compound and/or with or without an optionally-added above-mentioned plasticizer. In this case, compounds to be comprised are mixed in an appropriate proportion depending on the battery to be manufactured. The thus obtained mixture of polymerizable monomers/electroactive substances is shaped into a form such as a film, plate, disk and fiber and then polymerized to obtain an electrode. In this process, polymerization can be performed similarly as in the above-mentioned polymerization methods for obtaining the above-mentioned (co)polymer, for example, using heat and/or electromagnetic radiation. When the electroactive substance gives a highly flowable mixture of polymerizable monomer/electroactive material like, for example, an aniline-based polymer soluble in an organic solvent, the mixture is shaped into a desired form, for example, applied on a support such as collector or other support made of glass or the like to form a film or plate, followed by polymerization to manufacture an electrode.

The thus manufactured electrode comprising above-mentioned electroactive substance is used as at least one of the electrodes and another electrode which has been similarly manufactured and comprises other electroactive material or a conventionally used electrode is used as the other one of the electrodes, and these two electrodes are put in a frame for construction of a battery or they are located on the support in such a configuration as they do not contact with each other. For example, negative electrode and positive electrode are attached at the edges thereof through a spacer of an appropriate thickness, placed in the above-mentioned frame, and then, after a polymerizable monomer mixture prepared by mixing at least one PUX or PUY compound with at least one electrolyte salt selected from the above-mentioned electrolyte salts such as alkali metal salts, with or without optionally-added above-mentioned other polymerizable compounds and/or with or without an optionally-added above-mentioned plasticizer is poured in between the negative and positive electrodes, the mixture is polymerized in the same manner as in the polymerization

methods for obtaining the above-mentioned (co)polymer, for example, with heat and/or electromagnetic radiation and optionally further the frame is sealed with an insulating resin such as polyolefins, epoxy resins and the like, whereby batteries are obtained in which a good contact between the electrode and the electrolyte is achieved. When the electrode obtained by polymerizing a mixture of the above-mentioned polymerizable monomers is used, batteries obtained are those in which an especially good contact between the electrode and the electrolyte is achieved.

In preparing such a polymerizable monomer mixture, proportion of each components are appropriately decided depending on the battery to be manufactured. The above-mentioned battery frame or support may be made of metal such as a stainless steel, resin such as polypropylene, polyimide, etc., or ceramic material such electroconductive or insulating glass and the like, although the material thereof are not particularly limited to those listed here. The frame or support may be shaped in a cylinder, a coin, a disk, a box, a sheet or any other form.

As described above, in fabricating a thin film, plate or disk battery a manufacturing process in which a polymerizable monomer mixture comprising at least one PUX or PUY compound and at least one electrolyte salt is polymerized to give a solid polymer electrolyte comprising a composite comprising (i) a homopolymer of a PUX or PUY compound or a copolymer comprising at least two PUX or PUY compounds or a copolymer comprising at least one PUX or PUY compound and at least one other polymerizable compound or a mixture of said homopolymer and copolymer and (ii) at least one electrolyte salt is particularly useful.

As an example of the. thus manufactured batteries of the present invention, Fig. 1 shows a schematic cross-sectional view of a thin solid-state battery. In Fig. 1, 1 is a positive electrode, 2 is a solid polymer electrolyte, 3 is a negative electrode, 4 is a collector, 5 is an insulating polyimide film which is a spacer, and 6 is an insulating resin sealing.

In the case where a cylindrical battery is fabricated, it is possible to employ a method comprising a process in which the above-described positive electrode sheet and negative electrode sheet are laid on top of the other with a solid polymer electrolyte sheet prepared in advance in such a manner as being placed between them to prepare a laminate, the resulting laminate is wound and then inserted in a cylindrical battery frame, in which the polymerizable monomer mixture as described above is poured, followed by polymerization.

Electric double-layer capacitor

Next, solid-state electric double layer capacitor of the present invention is explained below.

A whole solid-state electric double layer capacitor achieving high voltage output and large take-out current, and excellent in processability and reliability can be obtained by using above-mentioned solid polymer electrolyte of the present invention in the solid-state electric double layer capacitor.

Fig. 2 is a schematic cross-sectional view showing an example of a solid-state electric double layer capacitor of the present invention. The solid-state electric double layer capacitor comprises a thin film cell having an area of 1cm x 1cm and a thickness of about 0.5 mm. In Fig. 2, each of 8 is a collector, inside of which is arranged a pair of polarizable electrodes 7 and a solid polymer electrolyte film 9 is arranged between these electrodes. 10 is a spacer comprising an insulating film used in this embodiment, 11 is an insulating resin sealing and 12 is a lead wire.

The collector 8 is preferably made of a material which is electron-conducting and electrochemically anticorrosive, and has a specific surface area as large as possible. For example, there can be cited various metals and their sintered body, electron-conducting polymers, carbon sheets, etc.

The polarizable electrode 7 may comprise any polarizable material conventionally used in an electric double layer capacitor such as carbon materials, and an electrode comprising a material obtained by compounding such a carbon material with the solid polymer electrolyte of the present invention is preferred. The carbon material as polarizable material is not limited particularly so far as it has a sufficient specific surface area. The larger the specific surface area, the larger the capacity of the electric double layer. So, it is preferred to use the polarizable material of as large specific surface area as possible. For example, there can be used carbon blacks such as furnace black, thermal black (inclusive of acetylene black), channel black, etc., activated carbon such as coconut shell activated carbon, natural graphite, synthesized graphite, carbon prepared by a vapor phase method, graphitized carbon produced therefrom, polyacene, fullerenes such as $C_{60}$ and $C_{70}$, etc.

Next, an example for the manufacturing process of solid-state electric double layer capacitor of the present invention is explained below.

As described above, a manufacturing process in which a mixture of polymerizable monomer mixture obtained by mixing at least one PUX or PUY compound and at least one electrolyte salt is polymerized and made into a composite comprising (i) a homopolymer of a PUX or PUY compound or a copolymer comprising at least two PUX or PUY compounds or a copolymer comprising at least one PUX or PUY compound and at least one other polymerizable compound or a mixture of said homopolymer and copolymer and (ii) at least one electrolyte salt is particularly useful in manufacturing a solid-state electric double layer capacitor of the present invention.

In manufacturing a polarizable electrode which comprises a polarizable material such as carbon materials and the above-mentioned (co)polymer which is preferably used in a solid-state electric double layer capacitor of the

present invention, first, at least one PUX or PUY compound with or without optionally-added above-mentioned other polymerizable compounds and/or with or without an optionally-added above-mentioned plasticizer are mixed with a polarizable material. Each components are mixed in appropriate proportions which are decided depending on the capacitor to be manufactured. The thus obtained mixture of polymerizable monomers/polarizable materials is shaped into a film, plate or disk on a support, for example, on the collector, metal plate, glass plate, etc. and then polymerized similarly as in the above-mentioned polymerization methods for obtaining the above-mentioned (co)polymer, for example, with heat or electromagnetic radiation, whereby a polarizable electrode is manufactured. According to the process of the present invention, thin- film, -plate or -disk composite electrodes comprising a polarizable material and the above-mentioned (co)polymer can be manufactured which have a good contact with the collector.

Two of the thus manufactured polarizable electrodes are placed in a frame for construction of a capacitor or they are located on the support in such a configuration as they do not contact with each other. For example, the two electrodes are bonded at the edges thereof through an insulating spacer of an appropriate thickness, placed in the above-mentioned frame, and then, after a polymerizable monomer mixture prepared by mixing at least one PUX or PUY compound with at least one electrolyte salt selected from the above-mentioned electrolyte salts such as alkali metal salts, with or without optionally-added above-mentioned other polymerizable compounds and/or with or without an optionally-added above-mentioned plasticizer is poured in between the two electrodes, the mixture is polymerized in the same manner as mentioned above and optionally further the frame is sealed with an insulating resin such as polyolefins, epoxy resins and the like, whereby electric double layer capacitors are obtained in which a good contact between the electrode and the electrolyte is achieved.

In preparing such a monomer mixture, each components are mixed in appropriate proportions which are decided depending on the capacitor to be manufactured. The above-mentioned capacitor frame or support may be made of metal such as a stainless steel, resin such as polypropylene, polyimide, etc., or ceramic material such electroconductive or insulating glass and the like, although the material thereof are not particularly limited to those listed here. The frame or support may be shaped in a cylinder, a coin, a disk, a box, a sheet or any other form.

The shape of the solid-state electric double layer capacitor may be, in addition to the sheet type as shown in Fig. 2, a coin type, a disk type, a box type or a cylinder type which can be fabricated by the method comprising winding a laminate of a sheet-like polarizable electrode and a sheet-like solid polymer electrolyte in the form of a cylinder, inserting the cylinder in a cylindrical capacitor frame and sealing the frame.

When a cylindrical capacitor is to be fabricated, it is also possible to employ a method comprising a process in which the above-described polarizable electrode sheets are laid on top of the other with the solid polymer electrolyte sheet prepared in advance in such a manner as being placed between them, the resulting laminate is wound and inserted in a cylindrical capacitor frame, and then the above-mentioned polymerizable monomer mixture is poured in, which mixture is then polymerized.

## Advantageous Effects

The solid polymer electrolyte of the present invention is a solid polymer electrolyte comprising a comb-shaped or network-shaped polymer having an "oxyalkyl" group containing urethane bond incorporated into its side chain, which polymer, as described above, can be readily made and shaped into film, plate, disk, fiber or the like from the aforementioned polymerizable monomer mixture as a raw material and which has high ionic conductivity, good strength as film or other shaped article and an excellent processability to thin film, plate, disk, fiber or the like.

The battery of the present invention comprising the above-mentioned solid polymer electrolyte as ionic condudting substance can be easily produced in the form such as a thin film-, plate-, box- or coin-type, and it is free from short-circuit even when made in such a thin form. It produces a large take out current and provides a highly reliable battery, especially a whole solid type one.

Also, the battery of the present invention having negative electrode which comprises an electroactive material of lithium, lithium alloy, a carbon material which can occlude and discharge lithium ion or the like can be easily produced in the form of a thin film-, plate-, box- or coin- type by using the above-mentioned solid polymer electrolyte as ionic conducting substance, and it is free from short-circuit even when made in such a thin form. It produces a large take out current and provides a highly reliable battery, especially a whole solid type one.

Furthermore, the battery of the present invention having positive electrode which comprises the above-mentioned (co)polymer comprising at least one PUX or PUY compound and an electroactive substance such as an aniline-based polymer soluble in organic solvent or other electroconductive polymer, metal oxide, metal sulfide, a carbon material or the like and is characterized by using the above-mentioned solid polymer electrolyte as ionic conducting substance can be easily produced in the form such as a thin film-, plate-, box- or coin-type, and it is free from short-circuit even when made in such a thin form. It produces a large take out current and provides a highly reliable battery, especially a whole solid type one.

Still further, the electrode of the present invention which comprises the above-mentioned (co)polymer comprising at least one PUX or PUY compound and an electroactive substance such as an aniline-based polymer soluble in organic solvent or other electroconductive polymer, metal oxide, metal sulfide, a carbon material or the like and the manufacturing process of said electrode provide an electrode having desired flexibility without deteriorating excellent electrochemical activity which the said electroactive substance has, and specifically provide, for example, thin film-, plate- or disk-like electrode useful in various batteries.

In addition, according to the manufacturing process of the battery of the present invention, batteries in various shapes can be manufactured, especially it facilitates batteries to be made thinner and provides highly reliable batteries which can operate at high capacity and at high voltage and has good cyclability, especially a whole solid type one.

The electric double layer capacitor of the present invention is the one which comprises as an ionic conducting substance a solid polymer electrolyte that can be obtained by preparing an above-described polymerizable monomer mixture comprising at least one electrolyte salt which gives a comb-shaped or network-shaped polymer having an oxyalkyl group containing urethane bond and can be readily molded or shaped into film, plate or disk of good strength, and then polymerizing the mixture. It is free from short-circuit even when made in the form of a thin film-, plate-, box- or disk-type, provides a highly reliable electric double layer capacitor having a high output voltage and a large take out current, especially a whole solid-state electric double layer capacitor.

In particular, the electric double layer capacitor and the process for manufacturing the same according to the present invention provide a highly reliable electric double layer capacitor achieving a good contact between the polarizable electrode and the solid polymer electrolyte which functions as an ionic conducting substance, a high voltage output and a large take out current, and especially provide a whole solid-state electric double layer capacitor.

Best Mode for Carrying Out the Invention

Hereinafter, the present invention will be described more concretely by representative examples. Needless to say, these examples are mere examples for the purpose of explanation and the present invention is not limited to these examples by any means.

Example 1:

(1) Synthesis of monomer compound 3

Compound 3 was synthesized from compound 1 and compound 2 following the reaction indicated below:

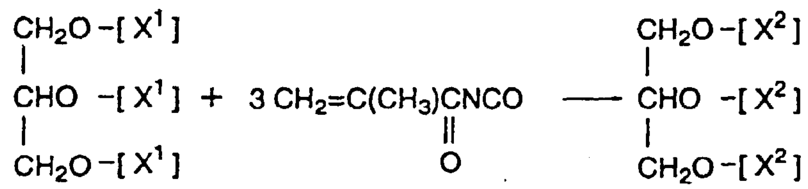

(Compound 1) (Compound 2) (Compound 3)

wherein $X^1$ and $X^2$ respectively means

$$-(CH_2CH_2O)_p[CH(CH_3)CH_2O]_qH$$

and

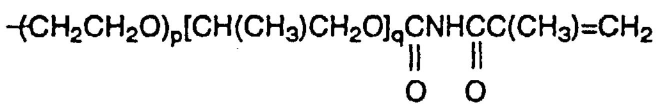

57.7 g of compound 1 (KOH value : 34.0 mg/g, p/q=4) and 3.89 g of compound 2 were dissolved in 100 ml

of sufficiently purified THF under a nitrogen atmosphere, and thereafter, 0.44 g of dibutyltin dilaurate was added thereto. Reaction was run at 25°C for about 15 hours to obtain compound 3 as a colorless viscous liquid.

$^1$H-NMR and IR measurements and elemental analyses were made, and the results revealed that compound 1 and compound 2 reacted in a molar proportion of 1:3, and that the isocyanate group in compound 2 disappeared and urethane bonds were formed to give compound 3.

(2) Production and evaluation of compound 3-based solid polymer electrolyte

1.46 g of compound 3 was dissolved in 100 ml of THF and 0.14 g of $LiCF_3SO_3$ was added thereto and mixed well. Then, THF was removed at room temperature under reduced pressure. Thus, a compound 3/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a compound 3 polymer/$LiCF_3SO_3$ composite as a transparent free-standing film of about 30 μm thickness. The ionic conductivity of the film measured at 25°C by an impedance method was $2 \times 10^{-5}$ S/cm.

Example 2:

(1) Synthesis of compound 6

Compound 6 was synthesized from compound 4 and compound 5 following the reaction indicated below:

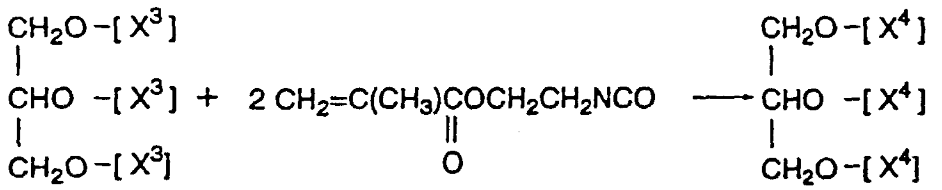

(Compound 4) (Compound 5) (Compound 6)

wherein $X^3$ means a mixture of

$$\{CH_2CH_2O)_p[CH(CH_3)CH_2O]_qH$$

and

$$\{CH_2CH_2O)_p[CH(CH_3)CH_2O]_qCH_3$$

in a ratio of 2:1 and

$X^4$ means a mixture of

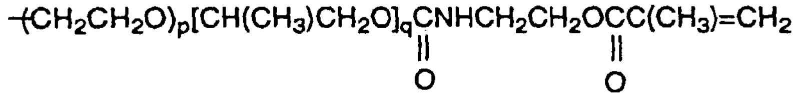

and

$$\{CH_2CH_2O)_p[CH(CH_3)CH_2O]_qCH_3$$

in a ratio of 2:1.

38.5 g of compound 4 (KOH value : 22.7 mg/g, p/q=5) and 2.42 g of compound 5 were dissolved in 100 ml of sufficiently purified THF under a nitrogen atmosphere, and thereafter, 0.29 g of dibutyltin dilaurate was added thereto.

Reaction was run at 25°C for about 15 hours to obtain compound 6 as a colorless viscous liquid.

$^1H$-NMR and IR measurements and elemental analyses were made, and the results revealed that compound 4 and compound 5 reacted in a molar proportion of 1:2, and that the isocyanate group in compound 5 disappeared and urethane bonds were formed to give compound 6.

(2) Production and evaluation of compound 6-based solid polymer electrolyte

1.40 g of compound 6 was dissolved in 100 ml of THF and 0.14 g of $LiCF_3SO_3$ was added thereto and mixed well. Then, THF was removed at room temperature under reduced pressure. Thus, a compound 6/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a compound 6 polymer/$LiCF_3SO_3$ composite as a transparent free-standing film of about 30 µm thickness. The inonic conductivity of the film measured at 25°C by an impedance method was $7x10^{-5}$ S/cm.

Example 3:

A solid polymer electrolyte was produced and fabricated into a transparent free-standing film of about 20 µm thickness in the same manner as in Example 1, except for using 0.15 g of $NaCF_3SO_3$ instead of $LiCF_3SO_3$ used in Example 1. The ionic conductivity of the thus fabrica-ted film measured at 25°C by an impedance method was $3x10^{-5}$ S/cm.

Example 4:

A solid polymer electrolyte was produced and fabricated into a transparent free-standing film of about 40 µm thickness in the same manner as in Example 1, except for using 0.11 g of LiI instead of $LiCF_3SO_3$ used in Example 1. The ionic conductivity of the thus fabricated film measured at 25°C by an impedance method was $3x10^{-4}$ S/cm.

Example 5:

(1) Synthesis of compound 8

$$CH_3(OCH_2CH_2)_mOH + CH_2=C(CH_3)CONCO$$

(Compound 7) (Compound 2)

$$\rightarrow CH_3(OCH_2CH_2)_mOCONHCOC(CH_3)=CH_2$$

(Compound 8)

Compound 8 was synthesized from compound 7 and compound 2 following the reaction indicated above.

55g of compound 7 (average molecular weight Mn = 550) and 11.1 g of compound 2 were dissolved in 100 ml of sufficiently purified THF under a nitrogen atmosphere, and thereafter, 0.66 g of dibutyltin dilaurate was added thereto. Reaction was run at 25°C for about 15 hours to obtain compound 8 as a colorless viscous liquid.

$^1H$-NMR and IR measurements and elemental analyses were made, and the results revealed that compound 7 and compound 2 reacted in a molar proportion of 1:1, and that the isocyanate group in compound 2 disappeared and an urethane bond was formed to give compound 8.

(2) Production and evaluation of [compound 3/compound 8 copolymer]-based solid polymer electrolyte

1.2 g of compound 3 synthesized in Example 1 and 1.2g of compound 8 were dissolved in 50 ml of THF and 0.14 g of $LiCF_3SO_3$ was added thereto and mixed well. Then, THF was removed at room temperature under reduced pressure. Thus, a compound 3/compound 8/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a [compound 3 /compound 8 copolymer]/$LiCF_3SO_3$ composite as a transparent free-standing film of about 30 µm thickness. The ionic conductivity of the film measured at 25°C by an impedance method was $1x10^{-4}$ S/cm.

Example 6:

(1) Synthesis of compound 10

Compound 10 was synthesized from compound 9 and the above-mentioned compound 5 (See Example 2) following the reaction indicated below:

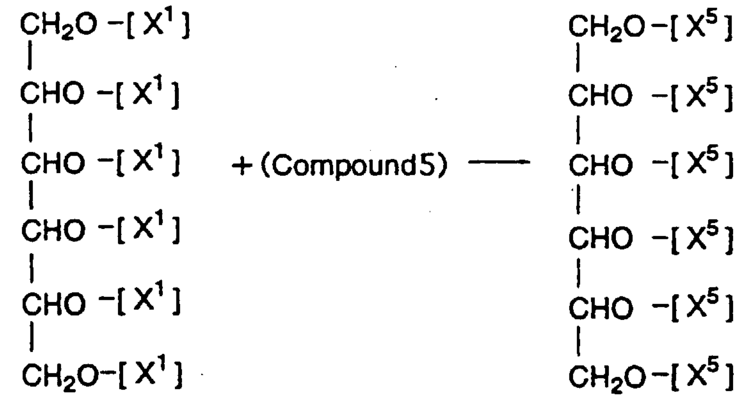


(Compound 9) (Compound10)

wherein $X^1$ and $X^5$ respectively means

$$-(CH_2CH_2O)_p[CH(CH_3)CH_2O]_qH$$

and

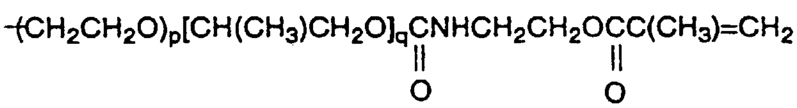

10.86 g of compound 5 and 57.7 g of compound 9 (KOH value : 68.0 mg/g, p/q=4) were dissolved in 100 ml of sufficiently purified THF under a nitrogen atmosphere, and thereafter, 0.44 g of dibutyltin dilaurate was added thereto. Reaction was run at 25°C for about 15 hours to obtain compound 10 as a colorless viscous liquid.

$^1$H-NMR and IR measurements and elemental analyses were made, and the results revealed that compound 9 and compound 5 reacted in a molar proportion of 1:6, and that the isocyanate group in compound 5 disappeared and urethane bonds were formed to give compound 10.

(2) Production and evaluation of a [compound 10 /compound 8 copolymer]-based solid polymer electrolyte

1.2 g of compound 10 and 1.2 g of compound 8 were dissolved in 100 ml of THF and 0.14 g of $LiCF_3SO_3$ was added thereto and mixed well. Then, THF was removed at room temperature under reduced pressure. Thus, a compound 10/compound 8/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a [compound 10/compound 8 copolymer]/$LiCF_3SO_3$ composite as a transparent, free-standing film of about 30 μm thickness. The ionic conductivity of the film measured at 25°C by an impedance method was $8x10^{-5}$ S/cm.

Example 7:

(1) Synthesis of compound 12

Compound 12 was synthesized from compound 11 and compound 2 following the reaction indicated below:

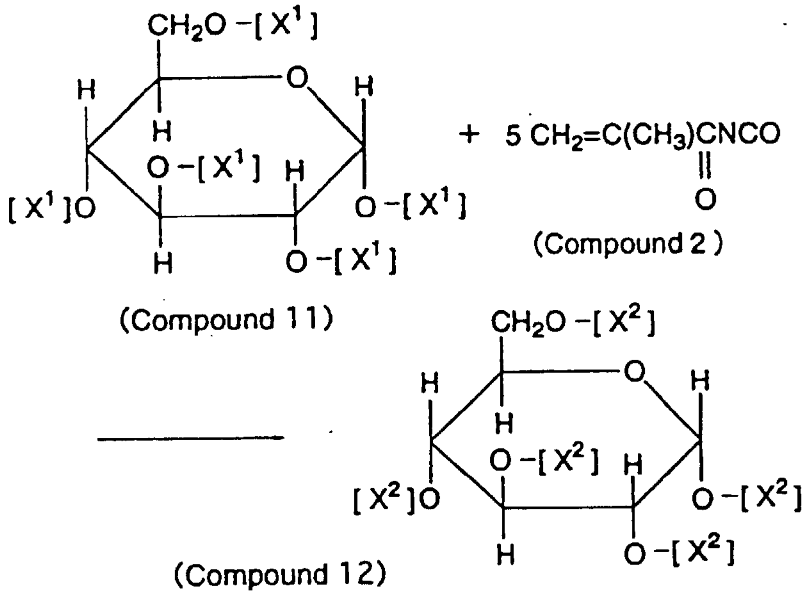

(Compound 11) (Compound 2) (Compound 12)

wherein $X^1$ and $X^2$ respectively means

$$-(CH_2CH_2O)_p[CH(CH_3)CH_2O]_qH$$

and

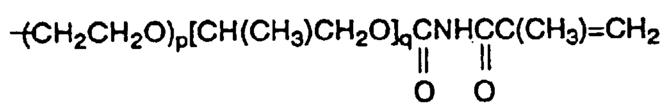

57.7 g of compound 11 (KOH value : 68.0 mg/g, p/q=6) and 7.78 g of compound 2 were dissolved in 100 ml of sufficiently purified THF under a nitrogen atmosphere, and thereafter, 0.44 g of dibutyltin dilaurate was added thereto. Reaction was run at 25°C for about 15 hours to obtain compound 12 as a colorless viscous liquid.

$^1H$-NMR and IR measurements and elemental analyses were made, and the results revealed that compound 11 and compound 2 reacted in a molar proportion of 1:5, and that the isocyanate group in compound 2 disappeared and urethane bonds were formed to give compound 12.

(2) Production and evaluation of a [compound 12/compound 3 copolymer]-based solid polymer electrolyte

0.10 g of compound 12 thus obtained and 1.0 g of compound 8 were dissolved in 20 ml of THF and 0.14 g of $LiCF_3SO_3$ was added thereto and mixed well. Then, THF was removed at room temperature under reduced pressure. Thus, a compound 12/compound 3/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a [compound 12/compound 3 copolymer]/$LiCF_3SO_3$ composite as a transparent, free-standing film of about 20 μm thickness. The ionic conductivity of the film measured at 25°C by an impedance method was $8x10^{-5}$ S/cm.

Example 8:

A solid polymer electrolyte was produced and fabricated in the same manner as in Example 7, except for using 0.30 g of AgI instead of $LiCF_3SO_3$ used in Example 7. The ionic conductivity of the thus fabricated film measured at 25°C by an impedance method was $3x10^{-4}$ S/cm.

Example 9:

0.40 g of compound 3, 1.40 g of compound 8, 1.5 g of propylene carbonate (PC) and 0.28 g of $LiCF_3SO_3$ were mixed well under an argon atmosphere to obtain a compound 3/compound 8/PC/$LiCF_3SO_3$ mixture (polymerizable monomer mixture) as a viscous liquid. Under argon atmosphere, a portion of the mixture thus obtained was applied on a glass plate, and heated at 100°C for 1 hour to produce a [compound 3/compound 8 copolymer]/PC/$LiCF_3SO_3$ composite as a transparent, free-standing film of about 50 μm thickness. The ionic conductivity of the film measured at 25°C by an impedance method was $2x10^{-3}$ S/cm.

Example 10:

A [compound 3/compound 8 copolymer]/TG/$LiCF_3SO_3$ composite as a transparent, free-standing film of about 50 μm thickness was fabricated in the same manner as in Example 9, except for using tetraglyme (TG) instead of propylene carbonate used in Example 9. The ionic conductivity of the film measured at 25°C by an impedance method was $7x10^{-4}$ S/cm.

Example 11:

A [compound 3/compound 8 copolymer]/DEC/$LiCF_3SO_3$ composite as a transparent, free-standing film of about 50 μm thickness was fabricated in the same manner as in Example 9, except for using diethyl carbonate (DEC) instead of propylene carbonate used in Example 9. The ionic conductivity of the film measured at 25°C by an impedance method was $3x10^{-3}$ S/cm.

Example 12: Preparation of a polymerizable monomer mixture

0.20 g of compound 3, 1.30 g of compound 8, 1.3 g of propylene carbonate (PC), 1.3 g of ethylene carbonate (EC) and 0.56 g of $LiBF_4$ were mixed well under an argon atmosphere to produce a polymerizable monomer mixture consisting of a compound 3/compound 8/PC/EC/$LiBF_4$ mixture as a viscous liquid.

Under argon atmosphere, a portion of the mixture thus obtained was applied on a glass plate, and heated at 100°C for 1 hour to produce a [compound 3/compound 8 copolymer]/PC/EC/$LiBF_4$ composite as a transparent, free-standing film of about 50 μm thickness. The ionic conductivity of the film measured at 25°C and -10°C by an impedance method was $3x10^{-3}$ S/cm and $1x10^{-3}$ S/cm, respectively.

Example 13:

(1) Synthesis of compound 15

$$H(OCH_2CH_2)_mOH + 2\ CH_2{=}CHCOOCH_2CH(CH_3)NCO$$

(Compound 13) (Compound 14)

$$\rightarrow CH_2{=}CHCOOCH_2CH(CH_3)NHCO(OCH_2CH_2)_mOCONHCH(CH_3)CH_2OCOCH{=}CH_2$$

(Compound 15)

Compound 15 was synthesized from compound 13 and compound 14 following the reaction indicated above.

55.0g of compound 13 (KOH value : 56.0 mg/g) and 8.53 g of compound 14 were dissolved in 100 ml of sufficiently purified THF under a nitrogen atmosphere, and thereafter, 0.36 g of dibutyltin dilaurate was added thereto. Reaction was run at 25°C for about 15 hours to obtain compound 15 as a colorless viscous liquid.

$^1$H-NMR and IR measurements and elemental analyses were made, and the results revealed that compound 13 and compound 14 reacted in a molar proportion of 1:2, and that the isocyanate group in compound 14 disappeared and urethane bonds were formed to give compound 15.

(2) Production and evaluation of [compound 15 /compound 8 copolymer]-based solid polymer electrolyte

1.0 g of compound 8 and 0.1 g of compound 15 were dissolved in 20 ml of THF and 0.14 g of $LiCF_3SO_3$ was

added thereto and mixed well. Then, THF was removed at room temperature under reduced pressure. Thus, a compound 8 /compound 15/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a [compound 8 /compound 15 copolymer]/$LiCF_3SO_3$ composite as a transparent free-standing film of about 20 µm thickness. The ionic conductivity of the film measured at 25°C by an impedance method was $2x10^{-5}$ S/cm.

Example 14:

(1) Synthesis of compound 17

Compound 17 was synthesized from compound 16 and the above-mentioned compound 5 (See Example 2) following the reaction indicated below.

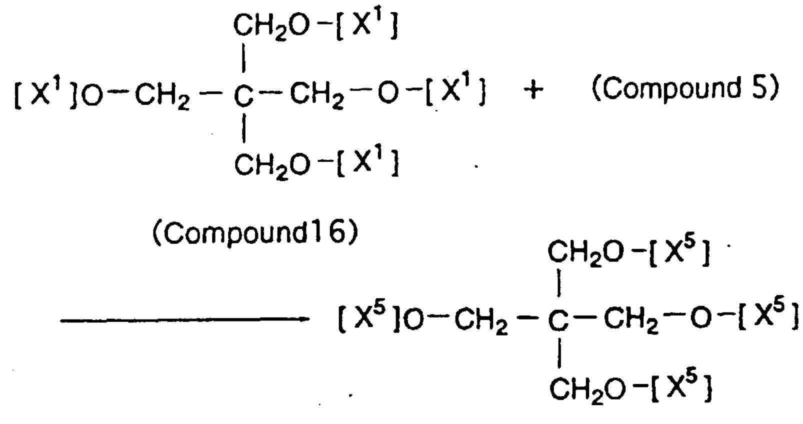

(Compound 5)

(Compound16)

(Compound 17)

wherein $X^1$ and $X^5$ respectively means

$$-(CH_2CH_2O)_p[CH(CH_3)CH_2O]_qH$$

and

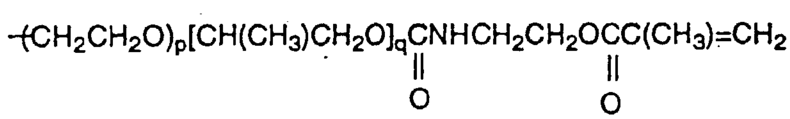

55.0 g of compound 16 (KOH value : 56.0 mg/g, p/q=7) and 8.53 g of compound 5 were dissolved in 100 ml of sufficiently purified THF under a nitrogen atmosphere, and thereafter, 0.36 g of dibutyltin dilaurate was added thereto. Reaction was run at 25°C for about 15 hours to obtain compound 17 as a colorless viscous liquid.

$^1H$-NMR and IR measurements and elemental analyses were made, and the results revealed that compound 16 and compound 5 reacted in a molar proportion of 1:4, and that the isocyanate group in compound 5 disappeared and urethane bonds were formed to give compound 17.

(2) Production and evaluation of a compound 17-based solid polymer electrolyte

1.1 g of compound 17 was dissolved in 100 ml of THF and 0.14 g of $LiCF_3SO_3$ was added thereto and mixed well. Then, THF was removed at room temperature under reduced pressure. Thus, a compound 17/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a compound 17 polymer/ $LiCF_3SO_3$ composite as a transparent, free-standing film of about 20 µm thickness. The ionic conductivity of the film measured at 25°C by an impedance method was $1x10^{-5}$ S/cm.

Example 15: Preparation of a polymerizable monomer mixture

1.50 g of compound 17, 1.3 g of propylene carbonate (PC), 1.3 g of ethylene carbonate (EC) and 0.56 g of $LiBF_4$ were mixed well under an argon atmosphere to produce a polymerizable monomer mixture consisting of a compound 17/PC/EC/$LiBF_4$ mixture as a viscous liquid.

Under argon atmosphere, the mixture was applied on a glass plate, and heated at 100°C for 1 hour to produce a compound 17 polymer/PC/EC/$LiBF_4$ composite as a transparent, free-standing film of about 50 μm thickness. The ionic conductivity of the film measured at 25°C and -10°C by an impedance method was $2.5x10^{-3}$ S/cm and $0.7x10^{-3}$ S/cm, respectively.

Example 16:

1.1 g of ω-methyloligooxyethyl methacrylate:

$$CH_2=C(CH_3)CO(OCH_2CH_2)_nOCH_3 \qquad (\bar{n}=23)$$

NK-ester M-230G (Product of Shin-Nakamura Chemical Industrial Co., LTD.) and 1.1 g of compound 3 (See Example 1) were dissolved in 100 ml of THF and 0.14 g of $LiCF_3SO_3$ was added thereto and mixed well. Then, THF was removed at room temperature under reduced pressure. Thus, a compound 3/M-230G/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a [compound 3/M-230G copolymer] /$LiCF_3SO_3$ composite as a transparent, free-standing film of about 20 μm thickness. The ionic conductivity of the film measured at 25°C by an impedance method was $8x10^{-6}$ S/cm.

Example 17:

1.1 g of compound 3 and 0.2 g of N,N-dimethyl acrylamide were dissolved in 100 ml of THF and 0.14 g of $LiCF_3SO_3$ was added thereto and mixed well. Then, THF was removed at room temperature under reduced pressure. Thus, a compound 3/ N,N-dimethyl acrylamide/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a [compound 3/N,N-dimethyl acrylamide copolymer] /$LiCF_3SO_3$ composite as a transparent, free-standing film of about 20 μm thickness. The ionic conductivity of the film measured at 25°C by an impedance method was $2x10^{-5}$ S/cm.

Example 18:

1.1 g of compound 3 and 0.2 g of polyethylene oxide PEO-1 (Product of Sumitomo Seika K.K.) were dissolved in 100 ml of THF and 0.14 g of $LiCF_3SO_3$ was added thereto and mixed well. Then, THF was removed at room temperature under reduced pressure. Thus, a compound 3/PEO-1/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a PEO-1/compound 3 polymer/$LiCF_3SO_3$ composite as a transparent, free-standing film of about 20 μm thickness. The ionic conductivity of the film measured at 25°C by an impedance method was $1x10^{-5}$ S/cm.

Example 19: Production of a positive electrode comprising cobalt oxide and solid polymer electrolyte

11 g of $Li_2CO_3$ and 24 g of $Co_3O_4$ were mixed well and heated at 800°C for 24 hours under an oxygen atmosphere, followed by pulverizing to obtain $LicoO_2$ powder. The $LiCoO_2$ powder and the polymerizable monomer mixture produced in Example 13 were mixed in proportion by weight of 7:3 under an argon atmosphere, and the mixture was applied on a stainless steel foil in an area of 1cm x 1cm and to a thickness of about 200 μm. Further, the coated foil was heated at about 100°C for 1 hour for polymerization to produce a cobalt oxide/solid polymer electrolyte composite positive electrode (65 mg).

Example 20: Fabrication of secondary battery comprising solid polymer electrolyte

In a glove box under an argon atmosphere, a lithium foil of 75 μm thickness was cut to a piece of 1cm x 1cm (5.3 mg). Each edge portion (1 mm width) of the foil was covered with a polyimide film of 5 μm thickness as a spacer.

Next, the polymerizable monomer mixture produced in Example 12 was applied on the lithium foil, and then, the cobalt oxide positive electrode produced in Example 19 was tightly fitted onto the mixture-coated surface of the lithium foil. The resulting structure was heated at 100 °C for 1 hour, and the edge portions of the battery were sealed with an epoxy resin to produce a solid-state lithium/cobalt oxide secondary battery.

The cross-sectional view of the thus obtained battery is schematically shown in Fig. 1

This battery was subjected to repeated charging and discharging at an operating voltage of 2.0 to 4.3 V and at a constant current of 0.1 mA. As a result, it revealed that the maximum discharge capacity was 4.0 mAh, and a cycle life until the capacity decreased to 50 % was 200 times.

Another battery fabricated in the same manner was subjected to repeated charging and discharging at an operating voltage of 2.0 to 4.3 V and at a constant current of 0.3 mA. As a result, it revealed that the maximum discharge capacity was 3.8 mAh, and a cycle life until the capacity decreased to 50 % was 167 times.

Example 21: Production of a positive electrode comprising polyaniline and solid polymer electrolyte

Electrolytic oxidative electrochemical polymerization was performed on a 1cm x 1cm stainless steel foil using a graphite foil as the counter electrode and a 0.5 M aqueous aniline solution and a 1.5 M aqueous $HBF_4$ solution by a constant current method at a current of 1 mA to obtain a film of polyaniline of about 100 μm thickness. Then, the film was washed with methanol and dried at 80°C for 24 hours under vacuum.

Then, the thus obtained film was transferred into a glove box under an argon atmosphere, and impregnated with the polymerizable monomer mixture produced in Example 12. Then, polymerization was performed at 100 °C for 1 hour to produce a positive electrode comprising polyaniline/solid polymer electrolyte (45 mg).

Example 22: Fabrication of secondary battery comprising lithium, polyaniline and solid polymer electrolyte

A lithium/polyaniline solid secondary battery was produced in the same manner as in Example 20 except that the positive electrode comprising polyaniline and solid polymer electrolyte produced in Example 21 was used instead of that comprising cobalt oxide.

This battery was subjected to repeated charging and discharging at an operating voltage of 2.0 to 4.0 V and at a constant current of 0.1 mA. As a result, it revealed that the maximum discharge capacity was 1.0 mAh, and a cycle life until the capacity decreased to 50% was 356 times.

Another battery fabricated in the same manner was subjected to repeated charging and discharging at an operating voltage of 2.0 to 4.0 V and at a constant current of 0.3 mA. As a result, it revealed that the maximum discharge capacity was 0.9 mAh, and a cycle life until the capacity decreased to 50% was 280 times.

Example 23: Production of a negative electrode comprising graphite and solid polymer electrolyte

10 g of graphite fiber produced by a vapor phase method and subsequent graphitization by Showa Denko K. K. (average fiber diameter: 0.3 μm, average fiber length: 2.0 μm, heat treated at 2,700°C) was mixed with 200 ml of 2.5 M butyllithium solution in n-hexane and stirred for 8 hours at room temperature to incorporate lithium ion in advance, followed by washing with hexane and drying in vacuo. 6 g of the graphite fiber thus prepared which incorporated lithium at an atomic ratio of C/Li = 12/1 (determined by elemental analysis) and 4 g of the polymerizable monomer mixture prepared in Example 15 were mixed under an argon atmosphere and an aliquot of the mixture was applied on a stainless steel foil to an area of 1cm x 1cm and a thickness of about 150 μm. The coated foil was heated at about 100°C for 1 hour for polymerization to produce a negative electrode (21 mg) comprising a graphite (C/Li = 12/1) and solid polymer electrolyte.

Example 24: Fabrication of a secondary battery comprising cobalt oxide, graphite and solid polymer electrolyte

A graphite/cobalt oxide solid secondary battery was produced in the same manner as in Example 20 except that the negative electrode comprising graphite and solid polymer electrolyte produced in Example 23 was used instead of the lithium foil.

This battery was subjected to repeated charging and discharging at an operating voltage of 1.5 to 4.3 V and at a constant current of 0.1 mA. As a result, it revealed that the maximum discharge capacity was 3.8 mAh, and a cycle life until the capacity decreased to 50% was 197 times.

Another battery fabricated in the same manner was subjected to repeated charging and discharging at an operating voltage of 1.5 to 4.3 V and at a constant current of 0.3 mA. As a result, it revealed that the maximum discharge capacity was 3.6 mAh, and a cycle life until the capacity decreased to 50% was 185 times.

Example 25: Synthesis of organic solvent-soluble polyaniline

In a 1 liter four-necked flask equipped with a thermometer, a stirrer and a condenser was placed 500 ml of 1N aqueous HC1 solution and 20.3 g of aniline was dissolved therein while bubbling nitrogen. Then, 11.5 g of solid ammonium persulfate was added little by little for about 30 minutes while stirring and bubbling nitrogen. Reaction temperature was kept at about 22°C. After the addition, the reaction was further continued for additional 22 hours. Then, the reaction mixture was filtered, and the residue was washed with 500 ml of deionized water. Then, the product was transferred into a beaker, and 500 ml of a 5% aqueous ammonia was added and the mixture was stirred for about 1 hour, followed by filtration. The residue was washed with deionized water and dried under reduced pressure to obtain about 16 g of undoped polyaniline powder.

Next, in a 300 ml three-necked flask was placed 150 ml of hydrazine monohydrate, and the above-described undoped polyaniline powder was added little by little at room temperature for about 1 hour while stirring and flowing nitrogen. Further, under flow of nitrogen, the mixture was stirred for about 10 hours at room temperature. Then, the reaction mixture was filtered under a nitrogen atmosphere and the residue was dried under reduced pressure. Further, under nitrogen atmosphere, the residue was washed with purified THF and with purified ether, followed by drying under reduced pressure to obtain about 14 g of reduced polyaniline powder.

Elemental analysis value of the reduced polyaniline powder was as follows: total of carbon, hydrogen and nitrogen was 98%, and elemental ratio of carbon/hydrogen/nitrogen was 6.00/4.95/1.01, which substantially coincided with the calculated value.

The powder was dissolved in purified N-methylpyrrolidone (NMP) to a concentration of up to about 5 wt% under argon atmosphere. The number-average molecular weight of the polyaniline obtained from the GPC measurement of the solution was about 20,000 as calculated using polystyrene as a molecular-weight standard material.

Example 26: Production of a positive electrode comprising polyaniline and solid polymer electrolyte

In a glove box under an argon atmosphere, the polymerizable monomer mixture prepared in Example 12 was mixed with the 5 wt% polyaniline/NMP mixture prepared in Example 25 so that the proportion by weight of the polyaniline and the polymerizable monomer mixture was 1:1. A portion of the resulting mixture was applied on a stainless steel foil of a size of 15 mm x 15 mm and of a thickness of 100 μm in an area surrounded by a polyimide film of 50 μm thickness affixed to each edge portion of the foil in a width of 3 mm.

Then, the foil coated with the mixture was heated at 60°C, 80°c and 100°C each for 1 hour to dry the coating and polymerize the monomers to produce a positive electrode comprising polyaniline and solid polymer electrolyte.

Example 27: Fabrication of secondary battery comprising lithium, polyaniline and solid polymer electrolyte

In a glove box under an argon atmosphere, a lithium foil of 25 μm thick was cut to a piece of 12 mm x 12 mm (2.6 mg). Each edge portion (2 mm width) of the foil was covered with a polyimide film of 5 μm thickness as a spacer. Next, a portion of the polymerizable monomer mixture prepared in Example 12 was applied on the lithium foil, and then the polyaniline positive electrode produced in Example 26 was tightly fitted onto the coated surface of the lithium foil. The resulting structure was heated at 100°C for 1 hour, and the edge portions of the battery were sealed with an epoxy resin to produce a solid-state lithium/polyaniline secondary battery having a structure same as shown in Fig. 1.

This battery was subjected to repeated charging and discharging at an operating voltage of 2 to 4 V and at a constant current of 0.1 mA. As a result, it revealed that the maximum discharge capacity was 1.5 mAh, and a cycle life until the capacity decreased to 50% was 201 times.

Another battery fabricated in the same manner was subjected to repeated charging and discharging at an operating voltage of 2.0 to 4.0 V and at a constant current of 0.3 mA. As a result, it revealed that the maximum discharge capacity was 1.3 mAh, and a cycle life until the capacity decreased to 50% was 170 times.

Example 28: Production of a positive electrode comprising poly-o-anisidine and solid polymer electrolyte

18 g of reduced poly-o-anisidine powder was synthesized and treated in the-same manner as in Example 25 except that 27.0 g of o-anisidine was used instead of the aniline used in Example 25.

Elemental analysis value of the reduced poly-o-anisidine powder for total of carbon, hydrogen and nitrogen was 98%, and elemental ratio of carbon/hydrogen/nitrogen was 7.00/6.91/1.03, which substantially coincided with the calculated value.

The reduced poly-o-anisidine powder was dissolved in purified N-methylpyrrolidone (NMP) to a concentration of up to about 8 wt% under argon atmosphere. The number-average molecular weight of the poly-o-anisidine obtained from the GPC measurement of the solution was about 15,000 as calculated using polystyrene as a molecular-weight

standard material.

Next, a positive electrode (62 mg) comprising poly-o-anisidine and solid polymer electrolyte was fabricated in the same manner as in Example 26 except that 8 wt% of the poly-o-anisidine/NMP solution was used instead of the 5 wt% polyaniline/NMP solution used in Example 26.

Example 29: Fabrication of secondary battery comprising poly-o-anisidine, lithium and solid polymer electrolyte

A solid-state lithium/poly-o-anisidine secondary battery was produced in the same manner as in Example 27 except that the positive electrode comprising poly-o-anisidine (62 mg) prepared in Example 28 was used instead of the polyaniline electrode.

This battery was subjected to repeated charging and discharging at an operating voltage of 1.8 to 3.8 V and at a constant current of 0.1 mA. As a result, it revealed that the maximum discharge capacity was 1.1 mAh, and a cycle life until the capacity decreased to 50% was 245 times.

Another battery fabricated in the same manner was subjected to repeated charging and discharging at an operating voltage of 1.8 to 3.8 V and at a constant current of 0.3 mA. As a result, it revealed that the maximum discharge capacity was 1.0 mAh, and a cycle life until the capacity decreased to 50% was 205 times.

Example 30: Preparation of a polymerizable monomer mixture

2.50 g of compound 3 obtained in Example 1, 4.0 g of propylene carbonate (PC) and 0.90 g of tetraethylammonium perchlorate (TEAP) were mixed well under an argon atmosphere to produce a polymerizable monomer mixture consisting of a compound 3/PC/TEAP mixture as a viscous liquid.

Under argon atmosphere, the mixture was applied on a glass plate, and heated at 100°C for 1 hour to produce a compound 3 polymer/PC/TEAP composite as a transparent, free-standing film of about 20 µm thickness. The ionic conductivity of the film measured at 25°C and -10°C by an impedance method was $2.5x10^{-3}$ S/cm and $0.7x10^{-3}$ S/cm, respectively.

Example 31: Production of an activated carbon electrode

Coconut shell activated carbon and the polymerizable monomer mixture prepared in Example 30 were mixed in a proportion by weight of 1:1 under an argon atmosphere, and a portion of the mixture was applied on a stainless steel foil to an area of 1cm x 1cm and a thickness of about 150 µm. Further, the coated foil was heated at about 100°C for 1 hour for polymerization to produce an activated carbon/solid polymer electrolyte composite electrode (13 mg).

Example 32: Fabrication of a solid-state electric double layer capacitor

In a glove box under an argon atmosphere, the activated carbon electrode (13 mg) of an area of 1cm x 1cm produced in Example 31 was covered with a polyimide film of 5 µm thick as a spacer at edge portion (1 mm width) thereof. Next, a portion of the polymerizable monomer mixture produced in Example 30 was applied on the electrode, and then another activated carbon electrode was tightly fitted thereto. The resulting frame was heated at 100°C for 1 hour, and the edge portions of the capacitor were sealed with an epoxy resin to produce a solid-state electric double layer capacitor having a cross-sectional structure as schematically shown in Fig. 2.

This capacitor was subjected to repeated charging and discharging at an operating voltage of 0 to 2.5 V and at a current of 0.1 mA. As a result, it revealed that the maximum discharge capacity was 210 mF. When the charging and discharging were repeated 50 times under this condition, there was no substantial change in the capacity.

Another capacitor fabricated in the same manner was subjected to repeated charging and discharging at an operating voltage of 0 to 2.5 V and at a current of 0.3 mA. As a result, it revealed that the maximum discharge capacity was 200 mF. When the charging and discharging were repeated 50 times under this condition, there was no substantial change in the capacity.

Example 33: Fabrication of a solid-state electric double layer capacitor

A polymerizable monomer mixture was prepared using 0.3g of lithium perchlorate ($LiClO_4$) instead of TEAP used in the polymerizable monomer mixture produced in Example 30. A solid-state electric double layer capacitor was fabricated in the same manner as in Example 32 except that the polymerizable monomer mixture thus obtained was used.

This capacitor was subjected to repeated charging and discharging at an operation voltage of 0 to 2.0 V and at a current of 0.1 mA. As a result, it revealed that the maximum discharge capacity was 150 mF. When the charging

and discharging were repeated 50 times under this condition, there was no substantial change in the capacity.

Another capacitor manufactured in the same manner was subjected to repeated charging and discharging at an operation voltage of 0 to 2.0 V and at a current of 0.3 mA. As a result, it revealed that the maximum discharge capacity was 140 mF. When the charging and discharging were repeated 50 times under this condition, there was no substantial change in the capacity.

Example 34: Production of an acetylene black electrode

Acetylene black and the polymerizable monomer mixture prepared in Example 30 were mixed in a proportion by weight of 6:4 under an argon atmosphere, and the resulting mixture was applied on a stainless steel foil to an area of 1cm x 1cm and a thickness of about 150 μm. Further, the coated foil was heated at about 100°C for 1 hour for polymerization to produce an acetylene black/solid polymer electrolyte composite electrode (14 mg).

Example 35: Fabrication of a solid-state electric double layer capacitor

A solid-state electric double layer capacitor was fabricated in the same manner as in Example 33 except that the acetylene black/solid polymer electrolyte composite electrode (14 mg) produced in Example 34 was used.

This capacitor was subjected to repeated charging and discharging at an operating voltage of 0 to 2.5 V and at a current of 0.1 mA. As a result, it revealed that the maximum discharge capacity was 50 mF. When the charging and discharging were repeated 50 times under this condition, there was no substantial change in the capacity.

Another capacitor fabricated in the same manner was subjected to repeated charging and discharging at an operating voltage of 0 to 2.5 V and at a current of 0.3 mA. As a result, it revealed that the maximum discharge capacity was 45 mF. When the charging and discharging were repeated 50 times under this condition, there was no substantial change in the capacity.

Example 36: Production of an activated carbon electrode

Coconut shell activated carbon and the polymerizable monomer mixture prepared in Example 12 were mixed in a proportion by weight of 1:1 under an argon atmosphere, and a portion of the mixture was applied on a stainless steel foil to an area of 1cm x 1cm and a thickness of about 150 μm. Further, the coated foil was heated at about 100°C for 1 hour for polymerization to produce an activated carbon/solid polymer electrolyte composite electrode (13 mg).

Example37: Fabrication of a solid-state electric double layer capacitor

In a glove box under an argon atmosphere, the activated carbon electrode (13 mg) of an area of 1cm x 1cm produced in Example 36 was covered with a polyimide film of 5 μm thick as a spacer at edge portion (1 mm width) thereof. Next, a portion of the polymerizable monomer mixture produced in Example 12 was applied on the electrode, and then another activated carbon electrode was tightly fitted thereto. The resulting frame was heated at 100°C for 1 hour, and the edge portions of the capacitor were sealed with an epoxy resin to produce a solid-state electric double layer capacitor having a cross-sectional structure as schematically shown in Fig. 2.

This capacitor was subjected to repeated charging and discharging at an operating voltage of 0 to 2.5 V and at a current of 0.1 mA. As a result, it revealed that the maximum discharge capacity was 200 mF. When the charging and discharging were repeated 50 times under this condition, there was no substantial change in the capacity.

Another capacitor fabricated in the same manner was subjected to repeated charging and discharging at an operating voltage of 0 to 2.5 V and at a current of 0.3 mA. As a result, it revealed that the maximum discharge capacity was 190 mF. When the charging and discharging were repeated 50 times under this condition, there was no substantial' change in the capacity.

Comparative Example 1:

(1) Synthesis of compound 18

$$CH_3(OCH_2CH_2)_mOH + \text{Compound 5}$$
(Compound 13)

$$\rightarrow CH_2{=}C(CH_3)COOCH_2CH_2NHCO(OCH_2CH_2)_mOCH_3$$
(Compound 18)

Synthesis of compound 18 was attempted following the reaction indicated above.

15.5g of compound 5 (See Example 2) and 55 g of monomethyloligoethylene glycol (average molecular weight : 550) (Compound 13) were dissolved in 100 ml of sufficiently purified THF under a nitrogen atmosphere, and thereafter, 0.66 g of dibutyltin dilaurate was added thereto. Reaction was run at 50°C for about 3 hours to obtain compound 18 as a colorless viscous liquid.

$^1$H-NMR and IR measurements and elemental analyses were made, and the results revealed that compound 5 and monomethyloligoethylene glycol reacted in a molar proportion of 1:1, and that the isocyanate group in compound 5 disappeared and a urethane bond was formed to give compound 18.

(2) Synthesis of compound 20

$$H(OCH_2CH_2)_mOH + 2\ CH_2{=}CHCOOCH_2CH_2NCO$$
(Compound 19)

$$\rightarrow CH_2{=}CHCOOCH_2CH_2NHCO(OCH_2CH_2)_mOCONHCH_2CH_2OCOCH{=}CH_2$$
(Compound 20)

Synthesis of compound 20 was attempted following the reaction indicated above.

28.2 g of acryloyloxyethylisocyanate (compound 19) and 60 g of oligoethylene glycol (average molecular weight : 600) were dissolved in 100 ml of sufficiently purified THF under a nitrogen atmosphere, and thereafter, 0.66 g of dibutyltin dilaurate was added thereto. Reaction was run at 50°C for about 3 hours to obtain a colorless viscous liquid. $^1$H-NMR and IR measurements and elemental analyses were made, and the results revealed that compound 19 and oligoethylene glycol reacted in a molar proportion of 2:1, and that the isocyanate group in compound 19 disappeared and urethane bonds were formed to give compound 20.

(3) Preparation of a polymerizable monomer mixture

2.10 g of the thus obtained compound 18, 0.51 g of compound 20, 1.3 g of propylene carbonate (PC), 1.3 g of ethylene carbonate (EC) and 0.56 g of $LiBF_4$ were mixed well under an argon atmosphere to produce a polymerizable monomer mixture consisting of a compound 18/compound 20/PC/EC/$LiBF_4$ mixture as a viscous liquid.

Under argon atmosphere, the mixture was applied on a glass plate, and heated at 100°C for 1 hour to try to produce a [compound 18/compound 20 copolymer]/PC/EC/$LiBF_4$ composite as a transparent, free-standing film of about 300 μm thickness. The ionic conductivity of the film measured at 25°C and -10°C by an impedance method was $3x10^{-3}$ S/cm and $1x10^{-3}$ S/cm, respectively.

Under argon atmosphere, the mixture was applied on a glass plate, and heated at 100°C for 1 hour so as to try to produce a [compound 18 /compound 20 copolymer]/PC/EC/$LiBF_4$ composite free-standing film of not more than 100 μm thickness. No free-standing film was obtained, however, when the film thickness was not more than 100 μm.

Comparative Example 2: Production of a positive electrode comprising cobalt oxide and solid polymer electrolyte

$Li_2CO_3$ and $Co_3O_4$ were mixed well and heated at 800°C for 24 hours under an oxygen atmosphere, followed by pulverizing to obtain $LiCoO_2$ powder. The $LiCoO_2$ powder and the polymerizable monomer mixture produced in Comparative Example 1 were mixed in proportion by weight of 7:3 under an argon atmosphere, and the mixture was applied on a stainless steel foil in an area of 1cm x 1cm and to a thickness of about 200 µm. Further, the coated foil was heated at about 100°C for 1 hour for polymerization to produce a cobalt oxide/solid polymer electrolyte composite positive electrode.

Comparative Example 3: Fabrication of secondary battery comprising solid polymer electrolyte

In a glove box under an argon atmosphere, a lithium foil of 75 µm thickness was cut to a piece of 1cm x 1cm. An edge portion (1 mm width) of the foil was covered with a polyimide film of 5 µm thickness as a spacer. Next, the polymerizable monomer mixture produced in Comparative Example 1 was applied on the lithium foil, and then, the cobalt oxide positive electrode produced in Comparative Example 2 was tightly fitted onto the mixture-coated surface of the lithium foil. The resulting structure was heated at 100 °C for 1 hour, and the edge portions of the battery were sealed with an epoxy resin to produce a solid-state lithium/cobalt oxide secondary battery.

This battery was subjected to repeated charging and discharging at an operating voltage of 2.0 to 4.3 V and at a constant current of 0.1 mA. As a result, it revealed that the maximum discharge capacity was 4.0 mAh, and a short-circuit was occurred when the cycle was repeatead 50 times.

Another battery was fabricated in the same manner except that a polyimide film of 10 µm thickness was used in place of a film of 5 µm thickness and the battery was subjected to repeated charging and discharging at an operating voltage of 2.0 to 4.3 V and at a constant current of 0.1 mA. As a result, it revealed that the maximum discharge capacity was 4.0 mAh, and a cycle life was 200 times.

Another battery fabricated in the same manner with a polyimide film of 10 µm thickness was also tested at an operating voltage of 2.0 to 4.3 V and at a constant current of 0.3 mA. As a result, it revealed that the maximum discharge capacity was 2.8 mAh, and a short-circuit was occurred when the cycle was repeated 85 times.

Comparative Example 4: Preparation of a polymerizable monomer mixture

2.10 g of compound 18, 0.51 g of compound 20, 1.6 g of propylene carbonate (PC), 1.6 g of ethylene carbonate (EC) and 0.90 g of tetraethylammonium perchlorate (TEAP) were mixed well under an argon atmosphere to produce a polymerizable monomer mixture consisting of a compound 18/ compound 20/PC/EC/TEAP mixture as a viscous liquid.

Under argon atmosphere, the mixture was applied on a glass plate, and heated at 100°C for 1 hour to produce a [compound 18/compound 20 copolymer]/PC/EC/TEAP composite as a transparent, free-standing film of about 300 µm thickness. The ionic conductivity of the film measured at 25°C and - 10°C by an impedance method was $3.0x10^{-3}$ S/cm and $1.0x10^{-3}$ S/cm, respectively.

Under argon atmosphere, the mixture was applied on a glass plate, and heated at 100°C for 1 hour so as to try to produce a [compound 18/compound 20 copolymer]/PC/EC/TEAP composite free-standing film of not more than 100 µm thickness. However, no free-standing film having thickness not more than 100 µm was obtained.

Comparative Example 5: Production of an activated carbon electrode

Coconut shell activated carbon and the polymerizable monomer mixture prepared in Comparative Example 4 were mixed in a proportion by weight of 1:1 under an argon atmosphere, and a portion of the mixture was applied on a stainless steel foil to an area of 1cm x 1cm and a thickness of about 150 µm. Further, the coated foil was heated at about 100°C for 1 hour for polymerization to produce an activated carbon/solid polymer electrolyte composite electrode.

Comparative Example 6: Fabrication of a solid-state electric double layer capacitor

In a glove box under an argon atmosphere, the activated carbon electrode of an area of 1cm x 1cm produced in Comparative Example 5 was covered with a polyimide film of 5 µm thick as a spacer at edge portion (1 mm width) thereof. Next, a portion of the polymerizable monomer mixture produced in Comparative Example 4 was applied on the electrode, and then another activated carbon electrode was tightly fitted thereto. The resulting frame was heated at 100°C for 1 hour, and the edge portions of the capacitor were sealed with an epoxy resin to produce a solid-state electric double layer capacitor.

This capacitor was subjected to repeated charging and discharging at an operating voltage of 0 to 2.5 V and at a current of 0.1 mA. As a result, short-circuit occurred and the capacitor did not work.

Another capacitor was fabricated in the same manner except that a polyimide film of 10 μm thickness was used in place of a film of 5 μm thickness and the capacitor was subjected to repeated charging and discharging at an operating voltage of 0 to 2.0 V and at a constant current of 0.1 mA. As a result, it revealed that the maximum discharge capacity was 150 mF, and the capacity remained almost unchanged after the charging and discharging cycle was repeated 50 times.

Another capacitor fabricated in the same manner with a polyimide film of 10 μm thickness was also tested at a current of 0.3 mA. As a result, it revealed that the maximum discharge capacity was 80 mF, and the capacity decreased to the half of the initial state after the charging and discharging cycle was repeated 50 times.

Example 38:

(1) Synthesis of compound 22

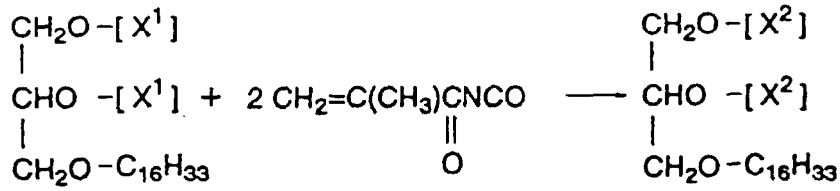

(Compound 21) (Compound 2) (Compound 22)

wherein $X^1$ and $X^2$ respectively means

$$-(CH_2CH_2O)_p[CH(CH_3)CH_2O]_qH$$

and

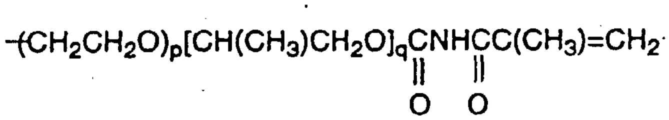

1-O-hexadecyl-rac-glycerol (Product of SIGMA Chemical Co.) was reacted with ethylene oxide and propylene oxide to obtain a compound 21 (KOH value : 21.0 mg/g, p/q=5) according to the method described in Can. J. Res., 8, 102 (1933).

1.73 g of compound 2 and 53.3 g of compound 21 were dissolved in 100 ml of sufficiently purified THF under a nitrogen atmosphere, and thereafter, 0.29 g of dibutyltin dilaurate was added thereto. Reaction was run at 25°C for about 15 hours to obtain compound 22 as a colorless viscous liquid.

$^1$H-NMR and IR measurements and elemental analyses were made, and the results revealed that compound 21 and compound 2 reacted in a molar proportion of 1:2, and that the isocyanate group in compound 2 disappeared and urethane bonds were formed to give compound 22.

(2) Production and evaluation of a compound 22-based solid polymer electrolyte

1.46 g of compound 22 was dissolved in 100 ml of THF and 0.14 g of $LiCF_3SO_3$ was added thereto and mixed well. Then, THF was removed at room temperature under reduced pressure. Thus, a compound 22/$LiCF_3SO_3$ mixture (polymerizable monomer mixture) was obtained as a viscous liquid. Under argon atmosphere, a portion of the mixture thus obtained was applied on a glass plate, and heated at 100°C for 1 hour to produce a compound 22 polymer/

$LiCF_3SO_3$ composite as a transparent, free-standing film of about 30 µm thickness. The ionic conductivity of the film measured at 25°C by an impedance method was $1x10^{-5}$ S/cm.

These results show that only the solid polymer electrolytes of the present invention have good film strength and high ionic conductivity and exhibit excellent properties when applied in a battery or a solid-state electric double layer capacitor. The results are summarized in Tables 1 and 2.

Table 1: Evaluation of Batteries

| Examples | Example 20 | | Example 22 | | Example 24 | | Example 27 | | Example 29 | | Comparative Example 3 | | |
|---|---|---|---|---|---|---|---|---|---|---|---|---|---|
| Compounds used in Solid Electrolyte [1] | #3 : #8 =0.2:1.3 | | #3 : #8 =0.2:1.3 | | #3 : #8 =0.2:1.3 | | #3 : #8 =0.2:1.3 | | #3 : #8 =0.2:1.3 | | #18 : #20 =2.1:0.51 | | |
| Positive Electrode | $LiCoO_2$ | | Polyaniline | | $LiCoO_2$ | | Soluble Polyaniline | | Poly-o-anisidine | | $LiCoO_2$ | | |
| Negative Electrode | Li | | Li | | Graphite | | Li | | Li | | Li | | |
| Thickness of Spacer (polyimide film) (μm) | 5 | 5 | 5 | 5 | 5 | 5 | 5 | 5 | 5 | 5 | 5 | 10 | 10 |
| (Dis)Charge current (mA) | 0.1 | 0.3 | 0.1 | 0.3 | 0.1 | 0.3 | 0.1 | 0.3 | 0.1 | 0.3 | 0.1 | 0.1 | 0.3 |
| Max Discharge Capacity[2] | 4.0 | 3.8 | 1.0 | 0.9 | 3.8 | 3.6 | 1.5 | 1.3 | 1.1 | 1.0 | 4.0 | 4.0 | 2.8 |
| Cycle Life to 50% Capacity[3] | 200 | 167 | 356 | 280 | 197 | 185 | 201 | 170 | 245 | 205 | 50 | 200 | 85 |

1) #3, #8, #18 and #20 represent Compound 3, Compound 8, Compound 18 and Compound 20, respectively.
2) Maximum Discharge Capacity (mAh)
3) Cycle times until the capacity decreased to 50%.

Table 2: Evaluation of Electric Double Layer Capacitors

| Examples | Example 32 | | Example 33 | | Example 35 | | Example 37 | | Comparative Example 6 | | |
|---|---|---|---|---|---|---|---|---|---|---|---|
| Compound used in Solid Electrolyte [1] | #3 | | #3 | | #3 | | #3 : #8 =0.2 : 1.3 | | #18 : #20 =2.1 : 0.51 | | |
| Electrolyte Salt[2] | TEAP | | $LiClO_4$ | | TEAP | | $LiBF_4$ | | TEAP | | |
| Thickness of Spacer (polyimide film) | Activated Carbon | | Activated Carbon | | Acetylene Black | | Activated Carbon | | Activated Carbon | | |
| (μm) | 5 | 5 | 5 | 5 | 5 | 5 | 5 | 5 | 5 | 10 | 10 |
| (Dis)Charge Current (mA) | 0.1 | 0.3 | 0.1 | 0.3 | 0.1 | 0.3 | 0.1 | 0.3 | 0.1 | 0.1 | 0.3 |
| Maximum Capacity (mF) | 210 | 200 | 150 | 140 | 50 | 45 | 200 | 190 | —[3] | 150 | 80 |
| Capacity after 50 cycles of Dis/charging (mF) | 210 | 200 | 150 | 140 | 50 | 45 | 200 | 190 | —[3] | 150 | 40 |

1) #3, #8, #18 and #20 represent Compound 3, Compound 8, Compound 18 and Compound 20, respectively.
2) Kind of Salt used in the solid polymer electrolyte
3) Did not function as a capacitor.

Industrial Applicability

The solid polymer electrolyte of the present invention comprises a composite comprising a polymer having a side chain of oxyalkyl group containing urethane bond and at least one electrolyte salt, and is characterized in that it can be readily formed into a thin film, plate or disk having good strength and high ionic conductivity.

A battery and a capacitor using the solid polymer electrolyte of the present invention do not suffer from the danger of leakage of the liquid since the ionic conducting substance thereof is solid and therefore it can be used with stability for a long time. The use of this solid polymer electrolyte enables fabrication of a thin battery and a thin capacitor.

The electrode of the present invention comprising a polymer having a side chain of oxyalkyl group containing urethane bond and an electroactive substance such as aniline-based polymer soluble in an organic solvent, other electroconductive polymer, metal oxide, metal sulfide and carbon material or polarizable material and the manufacturing process of the same provide an electrode having a high electrochemical activity and flexibility, especially a thin electrode having such properties. Accordingly, the electrode of the present invention is useful in providing electrodes usable in -various batteries and electric double layer capacitors and in providing the process for manufacturing the same.

Further, the battery of the present invention not only can operate at a high capacity and a large current as a whole solid type, but also can give good cyclability and assure excellent safety and reliability. Therefore, the battery of the present invention can be used as a power source for electric products such as a main power source for portable devices, as a backup power source, as well as a power source of large capacity for such as electric automobiles, road leveling, etc. Since it can be made into a thin film with ease, the battery of the present invention can be used as a paper-like battery such as one for identification card, etc.

Further, the solid-state electric double layer capacitor of the present invention, as compared with conventional whole solid-state electric double layer capacitors, can operate at a high capacity and a large current as a whole solid type, but also can give good cyclability and assure excellent safety and reliability and provides whole solid type electric double layer capacitor having such features. Therefore, it'can be used not only as a backup power source but also as a power source for various electric products when used in combination with a small battery. Since the capacitor of the present invention is excellent in processability such as rendering into a thin film, it is expected to be used in various applications other than those developed by conventional solid-state electric double layer capacitors.

## Claims

**1.** A solid polymer electrolyte comprising a composite of:

(a) a polymer obtainable from at least one compound which contains a structure derived from a polyhydric alcohol having three or more hydroxyl groups, at least two hydrogen atoms of said alcoholic hydroxyl groups being each replaced by a unit represented by a general formula (1) below:

$$CH_2=C(R^1)C(=O)\ [O(CH_2)_x(CH(CH_3))_y]_zNHC(=O)OR^2- \quad (1)$$

wherein $R^1$ represents a hydrogen or a methyl group; $R^2$ represents a divalent organic group containing at least one oxyalkylene group and the organic group may be linear, branched or cyclic and may contain one or more atoms other than carbon, hydrogen or oxygen; x and y each represents zero or a number of from 1 to 5; z represents zero or a numerical value of from 1 to 10, provided that z is zero when -both of x and y are zero; the units of $(CH_2)$ and $(CH(CH_3))$ may be arranged irregularly in the unit of $[O(CH_2)_x(CH(CH_3))_y]_z$;

provided that each of $R^1$, $R^2$, x, y, and z of each such unit in the compound may independently represent the above-mentioned atom, group, number, or value,
respectively and is not necessary to be the same as such of the other said unit in the compound;

and/or a copolymer comprising at least one of the above compounds as a comonomer (hereinafter, the above polymer and copolymer will be generally referred to as "(co)polymer"); and
(b) at least one electrolyte salt.

**2.** A solid polymer electrolyte as claimed in Claim 1 wherein the (co)polymer comprises a polymer produced from a monomer mixture of

(A) 1 - 100 wt% of at least one compound which has a structure derived from a polyhydric alcohol having three or more hydroxyl groups, at least two hydrogen atoms of said alcoholic hydroxyl groups being each replaced by a unit represented by the general formula (1);

(B) 0 - 95 wt% of at least one compound which contains one unit represented by the general formula (1) per molecule and no ethylenically unsaturated groups in the rest of the molecule; and

(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the electrolyte.

**3.** A solid polymer electrolyte comprising a composite of:

(a) a polymer obtainable from at least one compound which contains a structure derived from a polyhydric alcohol having three or more hydroxyl groups, at least two hydrogen atoms of said alcoholic hydroxyl groups being each replaced by a unit represented by a general formula (2) below:

$$CH_2{=}C(R^1)C({=}O)[O(CH_2)_x(CH(CH_3))_y]_zNHC({=}O)(OR^3)_n\text{-} \qquad (2)$$

wherein $R^1$ represents a hydrogen or a methyl group; $R^3$ represents $-(CH_2)_2-$, $-CH(CH_3)CH_2-$ or $-CH_2CH(CH_3)-$; n represents a number not less than 1; x and y each represents zero or a number of from 1 to 5; z represents zero or a numerical value of from 1 to 10, provided that z is zero when both of x and y are zero; the units of $(CH_2)$ and $(CH(CH_3))$ may be arranged irregularly in the unit of $[O(CH_2)_x(CH(CH_3))_y]_z$; provided that each of $R^1$, $R^3$, x, y and z of each such unit in the compound may independently represent the above-mentioned atom, group, number or value, respectively and is not necessary to be the same as such of the other said unit in the compound; and/or a copolymer comprising at least one of the above compounds as a comonomer and

(b) at least one electrolyte salt.

**4.** A solid polymer electrolyte as claimed in Claim 3 wherein the polymer or copolymer comprises a polymer produced from a monomer mixture of

(A) 1 - 100 wt% of at least one compound which has a structure derived from a polyhydric alcohol having three or more hydroxyl groups, at least two hydrogen atoms of said alcoholic hydroxyl groups being each replaced by a unit represented by the general formula (2);

(B) 0 - 95 wt% of at least one compound which contains one unit represented by the general formula (1) per molecule and no ethylenically unsaturated groups in the rest of the molecule; and

(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the electrolyte.

**5.** A solid polymer electrolyte as claimed in any of Claims 1 to 4, wherein the electrolyte salt is at least one compound selected from a group consisting of an alkali metal salt, a quaternary ammonium salt, a quaternary phosphonium salt and a transition metal salt.

**6.** A solid polymer electrolyte as claimed in any of Claims 1 to 5, wherein the solid polymer electrolyte further contains a plasticizer.

**7.** A battery which comprises the solid polymer electrolyte as claimed in any of Claims 1 to 6.

**8.** A battery as claimed in Claim 7 which comprises a negative electrode comprising lithium, lithium alloy or a carbon material which can occlude and discharge lithium ion.

**9.** A battery as claimed in Claim 7 or 8 which comprises a positive electrode comprising an aniline-based polymer soluble in an organic solvent or other electroconductive polymer, a metal oxide, a metal sulfide or a carbon material.

**10.** A process for manufacturing a battery which comprises steps of placing a polymerizable monomer mixture in a frame for construction of a battery or on a support and polymerizing the polymerizable monomer mixture, wherein the mixture comprises at least one compound which has a structure derived from a polyhydric alcohol having three or more hydroxyl groups, at least two hydrogen atoms of said alcoholic hydroxyl groups being each replaced by a unit represented by the general formula (1) below:

$$CH_2=C(R^1)C(=O)[O(CH_2)_x(CH(CH_3))_y]_zNHC(=O)OR^2- \qquad (1)$$

wherein $R^1$, $R^2$, x, y and z each means the same as in Claim 1, at least one electrolyte salt and optionally a plasticizer.

**11.** A process for manufacturing a battery as claimed in Claim 10 wherein the (co)polymer of the solid polymer electrolyte comprises a polymer produced from a monomer mixture of

(A) 1 - 100 wt% of at least one compound which has a structure derived from a polyhydric alcohol having three or more hydroxyl groups, at least two hydrogen atoms of said alcoholic hydroxyl groups being each replaced by a unit represented by the general formula (1);
(B) 0 - 95 wt% of at least one compound which contains one unit represented by the general formula (1) per molecule and no ethylenically unsaturated groups in the rest of the molecule; and
(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the electrolyte.

**12.** A process for manufacturing a battery which comprises steps of placing a polymerizable monomer mixture for the solid polymer electrolyte in a frame for construction of a battery or on a support, and polymerizing the polymerizable monomer mixture, wherein the mixture comprises at least one compound which has a structure derived from a polyhydric alcohol having three or more hydroxyl groups, at least two hydrogen atoms of said alcoholic hydroxyl groups being each replaced by a unit represented by the general formula (2):

$$CH_2=C(R^1)C(=O)[O(CH_2)_x(CH(CH_3))_y]_zNHC(=O)(OR^3)_n- \qquad (2)$$

wherein $R^1$, $R^3$, x, y, z and n each means the same as in Claim 3 and at least one electrolyte salt and optionally a plasticizer.

**13.** A process for manufacturing a battery as claimed in Claim 12 wherein the (co)polymer of the solid polymer electrolyte comprises a polymer produced from a monomer mixture of

(A) 1 -100 wt% of at least one compound which has a structure derived from a polyhydric alcohol having three or more hydroxyl groups, at least two hydrogen atoms of said alcoholic hydroxyl groups being each replaced by a unit represented by the general formula (2);
(B) 0 - 95 wt% of at least one compound which contains one unit represented by the general formula (1) per molecule and no ethylenically unsaturated groups in the rest of the molecule; and
(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the electrolyte.

**14.** An electrode which comprises a (co)polymer obtained from (a) at least one compound which contains a structure derived from a polyhydric alcohol having three or more hydroxyl groups, at least two hydrogen atoms of said

alcoholic hydroxyl groups being each replaced by a unit represented by a general formula (1) below:

$$CH_2{=}C(R^1)C({=}O)[O(CH_2)_x(CH(CH_3))_y]_zNHC({=}O)OR^2\text{-} \qquad (1)$$

wherein $R^1$, $R^2$, x, y and z each means the same as in Claim 1 and (b) an electroactive substance or polarizable material.

**15.** An electrode as claimed in Claim 14 wherein the (co)polymer for manufacturing an electrode comprises a polymer produced from a monomer mixture of

(A) 1 -100 wt% of at least one compound which has a structure derived from a polyhydric alcohol having three or more hydroxyl groups, at least two hydrogen atoms of said alcoholic hydroxyl groups being each replaced by a unit represented by the general formula (1);
(B) 0 - 95 wt% of at least one compound which contains one unit represented by the general formula (1) per molecule and no ethylenically unsaturated groups in the rest of the molecule; and
(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the electrode.

**16.** An electrode which comprises a (co)polymer obtainable from (a) at least one compound which contains a structure derived from a polyhydric alcohol having three or more hydroxyl groups, at least two hydrogen atoms of said alcoholic hydroxyl groups being each replaced by a unit represented by a general formula (2) below:

$$CH_2{=}C(R^1)C({=}O)[O(CH_2)_x(CH(CH_3))_y]_zNHC({=}O)(OR^3)_n\text{-} \qquad (2)$$

wherein $R^1$, $R^3$, x, y, z and n each means the same as in Claim 3 and (b) an electroactive substance or polarizable material.

**17.** An electrode as claimed in Claim 16 wherein the (co)polymer comprises a polymer produced from a monomer mixture of

(A) 1 - 100 wt% of at least one compound which has a structure derived from a polyhydric alcohol having three or more hydroxyl groups, at least two hydrogen atoms of said alcoholic hydroxyl groups being each replaced by a unit represented by the general formula (2);
(B) 0 - 95 wt% of at least one compound which contains one unit represented by the general formula (1) per molecule and no ethylenically unsaturated groups in the rest of the molecule; and
(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the electrode.

**18.** An electrode as claimed in any of Claims 14 to 17 in which the electroactive substance or polarizable material comprises an aniline-based polymer soluble in an organic solvent or other electroconductive polymer, a metal oxide, a metal sulfide or a carbon material.

**19.** An electric double layer capacitor comprising polarizable electrodes and an ionic conducting substance arranged between the electrodes, wherein the ionic conducting substance comprises the solid polymer electrolyte as claimed in any of Claims 1 to 6.

**20.** An electric double layer capacitor comprising polarizable electrodes and an ionic conducting substance arranged between the electrodes, wherein the polarizable electrodes comprise a composite of:

(a) a (co)polymer obtainable from at least one compound which contains a structure derived from a polyhydric alcohol having three or more hydroxyl groups, at least two hydrogen atoms of said alcoholic hydroxyl groups being each replaced by a unit represented by a general formula (1) below:

$$CH_2=C(R^1)C(=O)[O(CH_2)_x(CH(CH_3))_y]_zNHC(=O)OR^2- \qquad (1)$$

wherein $R^1$, $R^2$,x, y and z each means the same as in Claim 1; and
(b) a carbon material.

**21.** An electric double layer capacitor as claimed in Claim 20 wherein the (co)polymer of the composite comprises a polymer produced from a monomer mixture of

(A) 1 - 100 wt% of at least one compound which has a structure derived from a polyhydric alcohol having three or more hydroxyl groups, at least two hydrogen atoms of said alcoholic hydroxyl groups being each replaced by a unit represented by the general formula (1);
(B) 0 - 95 wt% of at least one compound which contains one unit represented by the general formula (1) per molecule and no ethylenically unsaturated groups in the rest of the molecule; and
(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the composite.

**22.** An electric double layer capacitor comprising polarizable electrodes and an ionic conducting substance arranged between the electrodes, wherein the polarizable electrodes comprise a composite of:

(a) a (co)polymer obtainable from at least one compound which contains a structure derived from a polyhydric alcohol having three or more hydroxyl groups, at least two hydrogen atoms of said alcoholic hydroxyl groups being each replaced by a unit represented by a general formula (2) below:

$$CH_2=C(R^1)C(=O)[O(CH_2)_x(CH(CH_3))_y]_zNHC(=O)(OR^3)_n- \qquad (2)$$

wherein $R^1$, $R^3$, x, y, z and n each means the same as in Claim 3; and
(b) a carbon material.

**23.** An electric double layer capacitor as claimed in Claim 22 wherein the (co)polymer of the composite comprises a polymer produced from a monomer mixture of

(A) 1 - 100 wt% of at least one compound which has a structure derived from a polyhydric alcohol having three or more hydroxyl groups, at least two hydrogen atoms of said alcoholic hydroxyl groups being each replaced by a unit represented by the general formula (2);
(B) 0 - 95 wt% of at least one compound which contains one unit represented by the general formula (1) per molecule and no ethylenically unsaturated groups in the rest of the molecule; and
(C) 0 - 80 wt % of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the composite.

**24.** A process for manufacturing an electric double layer capacitor which comprises steps of placing a polymerizable monomer mixture in a frame for construction of an electric double layer capacitor or on a support and polymerizing the polymerizable monomer mixture, wherein the mixture comprises

(a) at least one compound which contains a structure derived from a polyhydric alcohol having three or more hydroxyl groups, at least two hydrogen atoms of said alcoholic hydroxyl groups being each replaced by a unit

represented by a general formula (1) below:

$$CH_2=C(R^1)C(=O)[O(CH_2)_x(CH(CH_3))_y]_zNHC(=O)OR^2- \quad (1)$$

wherein $R^1$, $R^2$,x, y and z each means the same as in Claim 1; and
(b) at least one electrolyte salt and optionally a plasticizer.

**25.** A process for manufacturing an electric double layer capacitor as claimed in Claim 24, comprising steps of placing a polymerizable monomer mixture in a frame for construction of an electric double layer capacitor or on a support and polymerizing the polymerizable monomer mixture, wherein the mixture comprises

(A) 1 - 100 wt% of at least one compound which has a structure derived from a polyhydric alcohol having three or more hydroxyl groups, at least two hydrogen atoms of said alcoholic hydroxyl groups being each replaced by a unit represented by the above general formula (1);
(B) 0 - 95 wt% of at least one compound which contains one unit represented by the general formula (1) per molecule and no ethylenically unsaturated groups in the rest of the molecule; and
(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the composite.

**26.** A process for manufacturing an electric double layer capacitor which comprises steps of placing a polymerizable monomer mixture in a frame for construction of an electric double layer capacitor or on a support, and polymerizing the polymerizable monomer mixture, wherein the mixture comprises (a) at least one compound which contains a structure derived from a polyhydric alcohol having three or more hydroxyl groups, at least two hydrogen atoms of said alcoholic hydroxyl groups being each replaced by a unit represented by a general formula (2) below:

$$CH_2=C(R^1)C(=O)[O(CH_2)_x(CH(CH_3))_y]_zNHC(=O)(OR^3)_n- \quad (2)$$

wherein $R^1$, $R^3$,x, y, z and n each means the same as in Claim 3; and (b) at least one electrolyte salt and optionally a plasticizer.

**27.** A process for manufacturing an electric double layer capacitor as claimed in Claim 26, comprising steps of placing a polymerizable monomer mixture in a frame for construction of an electric double layer capacitor or on a support and polymerizing the polymerizable monomer mixture, wherein the mixture comprises

(A) 1 - 100 wt% of at least one compound which has a structure derived from a polyhydric alcohol having three or more hydroxyl groups, at least two hydrogen atoms of said alcoholic hydroxyl groups being each replaced by a unit represented by the above general formula (2);
(B) 0 - 95 wt% of at least one compound which contains one unit represented by the general formula (1) per molecule and no ethylenically unsaturated groups in the rest of the molecule; and
(C) 0 - 80 wt% of at least one compound containing an ethylenically unsaturated group and differing from (A) and (B);

provided that the total amount of (A) and (B) is not less than 20 wt% of the total amount of (A), (B) and (C), said polymer being contained in an amount of not less than 50 wt% of the total polymer used in the composite.

**Patentansprüche**

**1.** Festpolymerelektrolyt, enthaltend einen Verbundstoff aus:

(a) einem Polymer, erhältlich aus mindestens einer Verbindung, die eine von einem Polyalkohol mit drei oder mehr Hydroxygruppen abgeleitete Struktur enthält, worin mindestens zwei Wasserstoffatome der alkoholischen Hydroxygruppen durch eine durch die nachstehende allgemeine Formel (1) dargestellte Einheit ersetzt sind:

$$CH_2=C(R^1)C(=O)[O(CH_2)_x(CH(CH_3))_y]_zNHC(=O)OR^2- \quad (1)$$

worin $R^1$ ein Wasserstoffatom oder eine Methylgruppe darstellt; $R^2$ eine zweiwertige organische Gruppe darstellt, die mindestens eine Oxyalkylengruppe enthält, wobei die organische Gruppe linear, verzweigt oder zyklisch sein kann und ein oder mehrere Atome, die nicht Kohlenstoff, Wasserstoff oder Sauerstoff sind, enthalten kann; x und y jeweils 0 oder eine Zahl von 1 bis 5 sind; z 0 oder ein Zahlenwert von 1 bis 10 ist, mit der Maßgabe, daß z 0 ist, wenn sowohl x als auch y 0 sind; die Einheiten ($CH_2$) und ($CH(CH_3)$) in der Einheit $[O(CH_2)_x(CH(CH_3))_y]_z$ unregelmäßig angeordnet sein können; mit der Maßgabe, daß $R^1$, $R^2$, x, y und z der jeweiligen Einheit in der Verbindung jeweils unabhängig voneinander das vorstehend genannte Atom, die Gruppe, die Zahl bzw. den Zahlenwert darstellen und, daß es nicht erforderlich ist, daß sie die gleichen wie in einer anderen Einheit in der Verbindung sind;
und/oder einem Copolymer, das mindestens eine der vorstehenden Verbindungen als ein Comonomer enthält (nachfolgend wird das vorstehende Polymer und das Copolymer allgemein als "(Co)polymer" bezeichnet); und
(b) mindestens einem Elektrolytsalz.

**2.** Festpolymerelektrolyt gemäß Anspruch 1, worin das (Co)polymer ein Polymer umfaßt, das hergestellt ist aus einem Monomerengemisch aus

(A) 1 - 100 Gew.-% mindestens einer Verbindung, die eine Struktur hat, die von einem Polyalkohol mit drei oder mehr Hydroxygruppen abgeleitet ist, worin mindestens zwei Wasserstoffatome der alkoholischen Hydroxygruppen jeweils durch eine durch die allgemeine Formel (1) dargestellte Einheit ersetzt sind;
(B) 0 bis 95 Gew.-% mindestens einer Verbindung, die pro Molekül eine durch die allgemeine Formel (1) dargestellte Einheit und keine ethylenisch ungesättigten Gruppen im Rest des Moleküls enthält; und
(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% des in dem Elektrolyten verwendeten Gesamtpolymers enthalten ist.

**3.** Festpolymerelektrolyt, enthaltend einen Verbundstoff aus:

(a) einem Polymer, erhältlich aus mindestens einer Verbindung, die eine von einem Polyalkohol mit drei oder mehr Hydroxygruppen abgeleitete Struktur enthält, worin mindestens zwei Wasserstoffatome der alkoholischen Hydroxygruppen durch eine durch die nachstehende allgemeine Formel (2) dargestellte Einheit ersetzt sind:

$$CH_2=C(R^1)C(=O)[O(CH_2)_x(CH(CH_3))_y]_zNHC(=O)\ (OR^3)_n- \quad (2)$$

worin $R^1$ ein Wasserstoffatom oder eine Methylgruppe darstellt; $R^3$ $-(CH_2)_2-$, $-CH(CH_3)CH_2-$ oder $-CH_2CH(CH_3)-$ darstellt; n eine Zahl darstellt, die nicht kleiner als 1 ist; x und y jeweils 0 oder eine Zahl von 1 bis 5 darstellen; z 0 oder einen Zahlenwert von 1 bis 10 darstellt, mit der Maßgabe, daß z 0 ist, wenn sowohl x als auch y 0 sind, wobei die Einheiten ($CH_2$) und ($CH(CH_3)$) in der Einheit $[O(CH_2)_x(CH(CH_3))_y]_z$ unregelmäßig angeordnet sein können; mit der Maßgabe, daß $R^1$, $R^3$, x, y und z der jeweiligen Einheit in der Verbindung jeweils unabhängig voneinander das vorstehend genannte Atom, die Gruppe, die Zahl bzw. den Zahlenwert darstellen und, daß es nicht erforderlich ist, daß sie die gleichen wie in einer anderen Einheit in der Verbindung sind;
und/oder einem Copolymer, das mindestens eine der vorstehenden Verbindungen als ein Comonomer enthält, und
(b) mindestens einem Elektrolytsalz.

**4.** Festpolymerelektrolyt gemäß Anspruch 3, worin das Polymer oder das Copolymer ein Polymer umfaßt, das hergestellt ist aus einem Monomerengemisch aus

(A) 1 bis 100 Gew.-% mindestens einer Verbindung, die eine von einem Polyalkohol mit drei oder mehr Hydroxygruppen abgeleitete Struktur hat, worin mindestens zwei Wasserstoffatome der alkoholischen Hydroxygruppen durch eine durch die allgemeine Formel (2) dargestellte Einheit ersetzt sind;
(B) 0 bis 95 Gew.-% mindestens einer Verbindung, die pro Molekül eine durch die allgemeine Formel (1) dargestellte Einheit und keine ethylenisch ungesättigten Gruppen im Rest des Moleküls enthält; und
(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% des in dem Elektrolyten verwendeten Gesamtpolymers enthalten ist.

**5.** Festpolymerelektrolyt gemäß einem der Ansprüche 1 bis 4, worin das Elektrolytsalz mindestens eine Verbindung ist, die aus der aus einem Alkalimetallsalz, einem quaternären Ammoniumsalz, einem quaternären Phosphoniumsalz und einem Übergangsmetallsalz bestehenden Gruppe ausgewählt ist.

**6.** Festpolymerelektrolyt gemäß einem der Ansprüche 1 bis 5, worin der Festpolymerelektrolyt zusätzlich einen Weichmacher enthält.

**7.** Batterie, die den Festpolymerelektolyten gemäß einem der Ansprüche 1 bis 6 enthält.

**8.** Batterie gemäß Anspruch 7, die eine negative Elektrode enthält, die Lithium, eine Lithiumlegierung oder ein Kohlenstoffmaterial enthält, das Lithiumionen absorbieren und entladen kann.

**9.** Batterie gemäß Anspruch 7 oder 8, die eine positive Elektrode enthält, die ein Polymer auf der Grundlage von Anilin, das in einem organischen Lösungsmittel löslich ist, oder ein anderes elektrisch leitfähiges Polymer, ein Metalloxid, ein Metallsulfid oder ein Kohlenstoffmaterial enthält.

**10.** Verfahren zur Herstellung einer Batterie, das die Stufen des Einbringens eines polymerisierbaren Monomerengemisches in einen Konstruktionsrahmen für eine Batterie oder auf einen Träger und des Polymerisierens des polymerisierbaren Monomerengemisches umfaßt, wobei das Gemisch mindestens eine Verbindung, die eine von einem Polyalkohol mit drei oder mehr Hydroxygruppen abgeleitete Struktur hat, worin mindestens zwei Wasserstoffatome der alkoholischen Hydroxygruppen jeweils durch eine durch die nachstehende allgemeine Formel (1) dargestellte Einheit ersetzt sind:

$$CH_2{=}C(R^1)C({=}O)[O(CH_2)_x(CH(CH_3))_y]_zNHZ({=}O)OR^2\text{-} \qquad (1)$$

worin $R^1$, $R^2$, x, y und z jeweils dasselbe wie in Anspruch 1 bedeuten,
mindestens ein Elektrolytsalz und gegebenenfalls einen Weichmacher enthält.

**11.** Verfahren zur Herstellung einer Batterie gemäß Anspruch 10, wobei das (Co)polymer des Festpolymerelektrolyten ein Polymer umfaßt, das hergestellt ist aus einem Monomerengemisch aus

(A) 1 bis 100 Gew.-% mindestens einer Verbindung, die eine Struktur hat, die von einem Polyalkohol mit drei oder mehr Hydroxygruppen abgeleitet ist, worin mindestens zwei Wasserstoffatome der alkoholischen Hydroxygruppen jeweils durch eine durch die allgemeine Formel (1) dargestellte Einheit ersetzt sind;
(B) 0 bis 95 Gew.-% mindestens einer Verbindung, die pro Molekül mindestens eine durch die allgemeine Formel (1) dargestellte Einheit und keine ethylenisch ungesättigten Gruppen im Rest des Moleküls enthält; und
(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% in dem in dem Elektrolyten verwendeten Gesamtpolymer enthalten ist.

**12.** Verfahren zur Herstellung einer Batterie, das die Stufen des Einbringens eines polymerisierbaren Monomerengemisches für den Festpolymerelektrolyt in einen Konstruktionsrahmen für eine Batterie oder auf einen Träger und des Polymerisierens des polymerisieibaren Monomerengemisches umfaßt, wobei das Gemisch mindestens eine Verbindung, die eine von einem Polyalkohol mit drei oder mehr Hydroxygruppen abgeleitete Struktur hat, worin mindestens zwei Wasserstoffatome der alkoholischen Hydroxygruppen jeweils durch eine durch die allgemeine Formel (2) dargestellte Einheit ersetzt sind:

$$CH_2{=}C(R^1)C({=}O)[O(CH_2)_x(CH(CH_3))_y]_zNHC({=}O)(OR^3)_n\text{-} \quad (2)$$

worin $R^1$, $R^3$, x, y, z und n jeweils dasselbe wie in Anspruch 3 bedeuten,
mindestens ein Elektrolytsalz und gegebenenfalls einen Weichmacher enthält.

**13.** Verfahren zur Herstellung einer Batterie gemäß Anspruch 12, worin das (Co)polymer des Festpolymerelektrolyten ein Polymer umfaßt, das hergestellt ist aus einem Monomerengemisch aus

(A) 1 bis 100 Gew.-% mindestens einer Verbindung, die eine Struktur hat, die von einem Polyalkohol mit drei oder mehr Hydroxygruppen abgeleitet ist, worin mindestens zwei Wasserstoffatome der alkoholischen Hydroxygruppen jeweils durch eine durch die allgemeine Formel (2) dargestellte Einheit ersetzt sind;
(B) 0 bis 95 Gew.-% mindestens einer Verbindung, die pro Molekül eine durch die allgemeine Formel (1) dargestellte Einheit und keine ethylenisch ungesättigten Gruppen in dem Rest des Moleküls enthält; und
(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% des in dem Elektrolyten verwendeten Gesamtpolymers enthalten ist.

**14.** Elektrode, die ein (Co)polymer, das erhalten ist aus (a) mindestens einer Verbindung, die eine Struktur enthält, die von einem Polyalkohol mit drei oder mehr Hydroxygruppen abgeleitet ist, worin mindestens zwei Wasserstoffatome der alkoholischen Hydroxygruppen durch eine durch die nachstehende allgemeine Formel (1) dargestellte Einheit ersetzt sind:

$$CH_2{=}C(R^1)C({=}O)[O(CH_2)_x(CH(CH_3))_y]_zNHC({=}O)OR^2\text{-} \quad (1)$$

worin $R^1$, $R^2$, x, y und z jeweils dasselbe wie in Anspruch 1 bedeuten, und (b) eine elektroaktive Substanz oder ein polarisierbares Material enthält.

**15.** Elektrode gemäß Anspruch 14, worin das (Co)polymer zur Herstellung einer Elektrode ein Polymer umfaßt, das hergestellt ist aus einem Monomerengemisch aus

(A) 1 bis 100 Gew.-% mindestens einer Verbindung, die eine Struktur hat, die von einem Polyalkohol mit drei oder mehr Hydroxygruppen abgeleitet ist, worin mindestens zwei Wasserstoffatome der alkoholischen Hydroxygruppen jeweils durch eine durch die allgemeine Formel (1) dargestellte Einheit ersetzt sind;
(B) 0 bis 95 Gew.-% mindestens einer Verbindung, die pro Molekül eine durch die allgemeine Formel (1) dargestellte Einheit und keine ethylenisch ungesättigten Gruppen in dem Rest des Moleküls enthält; und
(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% des in der Elektrode eingesetzten Gesamtpolymers enthalten ist.

**16.** Elektrode, die ein (Co)polymer, das erhältlich ist aus (a) mindestens einer Verbindung, die eine von einem Polyalkohol mit drei oder mehr Hydroxygruppen abgeleitete Struktur enthält, worin mindestens zwei Wasserstoffatome der alkoholischen Hydroxygruppen jeweils durch eine durch die nachstehende allgemeine Formel (2) dargestellte

Einheit ersetzt sind:

$$CH_2{=}C(R^1)C({=}O)[O(CH_2)_x(CH(CH_3))_y]_zNHC({=}O)(OR^3)_n\text{-} \qquad (2)$$

worin $R^1$, $R^3$, x, y, z und n jeweils dasselbe wie in Anspruch 3 bedeuten, und (b) eine elektroaktive Substanz oder ein polarisierbares Material enthält.

**17.** Elektrode gemäß Anspruch 16, worin das (Co)polymer ein Polymer umfaßt, das hergestellt ist aus einem Monomerengemisch aus

(A) 1 bis 100 Gew.-% mindestens einer Verbindung, die eine Struktur hat, die von einem Polyalkohol mit drei oder mehr Hydroxygruppen abgeleitet ist, worin mindestens zwei Wasserstoffatome der alkoholischen Hydroxygruppen durch eine durch die allgemeine Formel (2) dargestellte Einheit ersetzt sind;
(B) 0 bis 95 Gew.-% mindestens einer Verbindung, die pro Molekül eine durch die allgemeine Formel (1) dargestellte Einheit und keine ethylenisch ungesättigten Gruppen in dem Rest des Moleküls enthält; und
(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% des in der Elektrode eingesetzten Gesamtpolymers enthalten ist.

**18.** Elektrode gemäß einem der Ansprüche 14 bis 17, worin die elektroaktive Substanz oder das polarisierbare Material ein Polymer auf der Grundlage von Anilin, das in einem organischen Lösungsmittel löslich ist, oder ein anderes elektrisch leitfähiges Polymer, ein Metalloxid, ein Metallsulfid oder ein Kohlenstoffmaterial umfaßt.

**19.** Elektrischer Doppelschichtkondensator, der polarisierbare Elektroden und eine zwischen den Elektroden angeordnete ionisch leitfähige Substanz enthält, worin die ionisch leitfähige Substanz den Festpolymerelektrolyten gemäß einem der Ansprüche 1 bis 6 enthält.

**20.** Elektrischer Doppelschichtkondensator, der polarisierbare Elektroden und eine zwischen den Elektroden angeordnete ionisch leitfähige Substanz enthält, worin die polarisierbaren Elektroden einen Verbundstoff enthalten aus:

(a) einem (Co)polymer, das aus mindestens einer Verbindung erhalten werden kann, die eine von einem Polyalkohol mit drei oder mehr Hydroxygruppen abgeleitete Struktur aufweist, worin mindestens zwei Wasserstoffatome der alkoholischen Hydroxygruppen durch eine durch die nachstehende allgemeine Formel (1) dargestellte Einheit ersetzt sind:

$$CH_2{=}C(R^1)C({=}O)[O(CH_2)_x(CH(CH_3))_y]_zNHC({=}O)OR^2\text{-} \qquad (1)$$

worin $R^1$, $R^2$, x, y und z jeweils dasselbe wie in Anspruch 1 bedeuten; und
(b) einem Kohlenstoffmaterial.

**21.** Elektrischer Doppelschichtkondensator gemäß Anspruch 20, worin das (Co)polymer des Verbundstoffes ein Polymer umfaßt, das hergestellt ist aus einem Monomerengemisch aus

(A) 1 bis 100 Gew.-% mindestens einer Verbindung, die eine von einem Polyalkohol mit drei oder mehr Hydroxygruppen abgeleitete Struktur hat, worin mindestens zwei Wasserstoffatome der alkoholischen Hydroxygruppen durch eine durch die allgemeine Formel (1) dargestellte Einheit ersetzt sind;
(B) 0 bis 95 Gew.-%mindestens einer Verbindung, die pro Molekül eine durch die allgemeine Formel (1) dargestellte Einheit und keine ethylenisch ungesättigten Gruppen in dem Rest des Moleküls enthält; und
(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A),

(B) und (C) ist, wobei das Polymer in einer Menge von nicht weniger als 50 Gew.-% des in dem Verbundstoff eingesetzten Gesamtpolymers enthalten ist.

**22.** Elektrischer Doppelschichtkondensator, der polarisierbare Elektroden und eine zwischen den Elektroden angeordnete ionisch leitfähige Substanz enthält, worin die polarisierbaren Elektroden einen Verbundstoff enthalten aus:

(a) einem (Co)polymer, das aus mindestens einer Verbindung erhalten werden kann, die eine von einem Polyalkohol mit drei oder mehr Hydroxygruppen abgeleitete Struktur aufweist, worin mindestens zwei Wasserstoffatome der alkoholischen Hydroxygruppen jeweils durch eine durch die nachstehende allgemeine Formel (2) dargestellte Einheit ersetzt sind:

$$CH_2{=}C(R^1)C({=}O)[O(CH_2)_x(CH(CH_3))_y]_zNHC({=}O)(OR^3)_n\text{-} \qquad (2)$$

worin $R^1$, $R^3$, x, y, z und n jeweils dasselbe wie in Anspruch 3 bedeuten; und
(b) einem Kohlenstoffmaterial.

**23.** Elektrischer Doppelschichtkondensator gemäß Anspruch 22, worin das (Co)polymer des Verbundstoffes ein Polymer umfaßt, das hergestellt ist aus einem Monomerengemisch aus

(A) 1 bis 100 Gew.-% mindestens einer Verbindung, die eine von einem Polyalkohol mit drei oder mehr Hydroxygruppen abgeleitete Struktur hat, worin mindestens zwei Wasserstoffatome der alkoholischen Hydroxygruppen durch eine durch die allgemeine Formel (2) dargestellte Einheit ersetzt sind;
(B) 0 bis 95 Gew.-% mindestens einer Verbindung, die pro Molekül eine durch die allgemeine Formel (1) dargestellte Einheit und keine ethylenisch ungesättigten Gruppen in dem Rest des Moleküls enthält; und
(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% des in dem Verbundstoff eingesetzten Gesamtpolymers enthalten ist.

**24.** Verfahren zur Herstellung eines elektrischen Doppelschichtkondensators, das die Stufen des Einbringens eines polymerisierbaren Monomerengemisches in einen Konstruktionsrahmen für einen elektrischen Doppelschichtkondensator oder auf einen Träger und des Polymerisierens des polymerisierbaren Monomerengemisches umfaßt, wobei das Gemisch

(a) mindestens eine Verbindung, die eine von einem Polyalkohol mit drei oder mehr Hydroxygruppen abgeleitete Struktur enthält, worin mindestens zwei Wasserstoffatome der alkoholischen Hydroxygruppen durch eine durch die nachstehende allgemeine Formel (1) dargestellte Einheit ersetzt sind:

$$CH_2{=}C(R^1)C({=}O)[O(CH_2)_x(CH(CH_3))_y]_zNHC({=}O)OR^2\text{-} \qquad (1)$$

worin $R^1$, $R^2$, x, y und z jeweils dasselbe wie in Anspruch 1 bedeuten; und
(b) mindestens ein Elektrolytsalz und gegebenenfalls einen Weichmacher enthält.

**25.** Verfahren zur Herstellung eines elektrischen Doppelschichtkondensator gemäß Anspruch 24, das die Stufen des Einbringens eines polymerisierbaren Monomerengemisches in einen Konstruktionsrahmen für einen elektrischen Doppelschichtkondensator oder auf einen Träger und des Polymerisierens des polymerisierbaren Monomerengemisches umfaßt, wobei das Gemisch enthält:

(A) 1 bis 100 Gew.-% mindestens einer Verbindung, die eine von einem Polyalkohol mit drei oder mehr Hydroxygruppen abgeleitete Struktur enthält, worin mindestens zwei Wasserstoffatome der alkoholischen Hydroxygruppen durch eine durch die allgemeine Formel (1) dargestellte Einheit ersetzt sind;
(B) 0 bis 95 Gew.-% mindestens einer Verbindung, die pro Molekül eine durch die allgemeine Formel (1) dargestellte Einheit und keine ethylenisch ungesättigten Gruppen in dem Rest des Moleküls enthält; und

(C) 0 bis 80 Gew.-% mindestens einer Verbindung, die eine ethylenisch ungesättigte Gruppe enthält und von (A) und (B) verschieden ist;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% des in dem Verbundstoff eingesetzten Gesamtpolymers enthalten ist.

**26.** Verfahren zur Herstellung eines elektrischen Doppelschichtkondensators, das die Stufen des Einbringens eines polymerisierbaren Monomerengemisches in einen Konstruktionsrahmen für einen elektrischen Doppelschichtkondensator oder auf einen Träger und des Polymerisierens des polymerisierbaren Monomerengemisches umfaßt, wobei das Gemisch enthält:

(a) mindestens eine Verbindung, die eine von einem Polyalkohol mit drei oder mehr Hydroxygruppen abgeleitete Struktur aufweist, worin mindestens zwei Wasserstoffatome der alkoholischen Hydroxygruppen durch eine durch die nachstehende allgemeine Formel (2) dargestellte Einheit ersetzt sind:

$$CH_2{=}C(R^1)C({=}O)[O(CH_2)_x(CH(CH_3))_y]_zNHC({=}O)(OR^3)_n\text{-} \qquad (2)$$

worin $R^1$, $R^3$, x, y, z und n jeweils dasselbe wie in Anspruch 3 bedeuten; und
(b) mindestens ein Elektrolytsatz und gegebenenfalls einen Weichmacher.

**27.** Verfahren zur Herstellung eines elektrischen Doppelschicht kondensators gemäß Anspruch 26, das die Stufen des Einbringens eines polymerisierbaren Monomerengemisches in einen Konstruktionsrahmen für einen elektrischen Doppelschichtkondensator oder auf einen Träger und des Polymerisierens des polymerisierbaren Monomerengemisches umfaßt, wobei das Gemisch enthält:

(A) 1 bis 100 Gew.-% mindestens einer Verbindung, die eine von einem Polyalkohol mit drei oder mehr Hydroxygruppen abgeleitete Struktur hat, worin mindestens zwei Wasserstoffatome der alkoholischen Hydroxygruppen durch eine durch die allgemeine Formel (2) dargestellte Einheit ersetzt sind;
(B) 0 bis 95 Gew.-% mindestens einer Verbindung, die pro Molekül eine durch die allgemeine Formel (1) dargestellte Einheit und keine ethylenisch ungesättigten Gruppen in dem Rest des Moleküls enthält; und
(C) 0 bis 80 Gew.-% mindestens einer Verbindung, die eine ethylenisch ungesättigte Gruppe enthält und von (A) und (B) verschieden ist:;

mit der Maßgabe, daß die Gesamtmenge an (A) und (B) nicht weniger als 20 Gew.-% der Gesamtmenge an (A), (B) und (C) ist, wobei das Polymer in einer Menge von nicht weniger als 50 Gew.-% des in dem Verbundstoff eingesetzten Gesamtpolymers enthalten ist.

## Revendications

**1.** Electrolyte polymère solide comprenant un composite de :

(a) un polymère pouvant être obtenu à partir d'au moins un composé qui contient une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ci-dessous :

$$CH_2{=}C(R^1)C({=}O)[O(CH_2)_x(CH(CH_3))_y]_zNHC({=}O)OR^2\text{-} \qquad (I)$$

dans laquelle $R^1$ représente un hydrogène ou un groupe méthyle ; $R^2$ représente un groupe organique divalent contenant au moins un groupe oxyalkylène et le groupe organique peut être linéaire, ramifié ou cyclique et peut contenir un ou plusieurs atomes autres que le carbone, l'hydrogène ou l'oxygène ; x et y représentent chacun zéro ou un nombre de 1 à 5 ; z représente zéro ou une valeur numérique de 1 à 10, du moment que z est zéro quand tant x que y sont zéro ; les motifs $(CH_2)$ et $(CH(CH_3))$ peuvent être agencés irrégulièrement

dans le motif $[O(CH_2)_x(CH(CH_3))_y]_z$ ; du moment que chacun de $R^1$, $R^2$, x, y et z de chaque tel motif dans le composé peut indépendamment représenter l'atome, groupe, nombre ou valeur susmentionné, respectivement, et n'est pas nécessairement le même que celui de l'autre dit motif dans le composé ;
et/ou un copolymère comprenant au moins l'un des composés ci-dessus à titre de comonomère (ci-après, les polymère et copolymère ci-dessus seront généralement appelés "(co)polymère") ; et
(b) au moins un sel d'électrolyte.

**2.** Electrolyte polymère solide selon la revendication 1, dans lequel le (co)polymère comprend un polymère produit à partir d'un mélange de monomères de

A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ;
B) 0 à 95 % en poids d'au moins un composé qui contient un motif représenté par la formule générale (1) par molécule et pas de groupes à insaturation éthylénique dans le reste de la molécule ; et
C) 0 à 80 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans l'électrolyte.

**3.** Electrolyte polymère solide comprenant un composite de :

(a) un polymère pouvant être obtenu à partir d'au moins un composé qui contient une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (2) ci-dessous :

$$CH_2{=}C(R^1)C({=}O)[O(CH_2)_x(CH(CH_3))_y]_zNHC({=}O)(OR^3)_n\text{-} \qquad (2)$$

dans laquelle $R^1$ représente un hydrogène ou un groupe méthyle ; $R^3$ représente-$(CH_2)_2$-, -$CH(CH_3)CH_2$- ou -$CH_2CH(CH_3)$- ; n représente un nombre non inférieur à 1 ; x et y représentent chacun zéro ou un nombre de 1 à 5 ; z représente zéro ou une valeur numérique de 1 à 10, du moment que z est zéro quand tant x que y sont zéro ; les motifs $(CH_2)$ et $(CH(CH_3))$ peuvent être agencés irrégulièrement dans le motif $[O(CH_2)_x(CH(CH_3))_y]_z$ ; du moment que chacun de $R^1$, $R^2$, x, y et z de chaque tel motif dans le composé peut indépendamment représenter l'atome, groupe, nombre ou valeur susmentionné, respectivement, et n'est pas nécessairement le même que celui de l'autre dit motif dans le composé ;
et/ou un copolymère comprenant au moins l'un des composés ci-dessus à titre de comonomère, et
(b) au moins un sel d'électrolyte.

**4.** Electrolyte polymère solide selon la revendication 3, dans lequel le polymère ou copolymère comprend un polymère produit à partir d'un mélange de monomères de

A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (2);
B) 0 à 95 % en poids d'au moins un composé qui contient un motif représenté par la formule générale (1) par molécule et pas de groupes à insaturation éthylénique dans le reste de la molécule ; et
C) 0 à 80 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans l'électrolyte.

5. Electrolyte polymère solide selon l'une quelconque des revendications 1 à 4, dans lequel le sel d'électrolyte est au moins un composé choisi dans l'ensemble constitué par un sel de métal alcalin, un sel d'ammonium quaternaire, un sel de phosphonium quaternaire et un sel de métal de transition.

6. Electrolyte polymère solide selon l'une quelconque des revendications 1 à 5, dans lequel l'électrolyte polymère solide contient en outre un plastifiant.

7. Batterie qui comprend l'électrolyte polymère solide tel que revendiqué dans l'une quelconque des revendications 1 à 6.

8. Batterie selon la revendication 7, qui comprend une électrode négative comprenant du lithium, un alliage de lithium ou un matériau carboné qui peut occlure et décharger des ions lithium.

9. Batterie selon la revendication 7 ou 8, qui comprend une électrode positive comprenant un polymère à base d'aniline soluble dans un solvant organique ou un autre polymère électroconducteur, un oxyde métallique, un sulfure métallique ou un matériau carboné.

10. Procédé pour fabriquer une batterie, qui comprend les étapes de disposition d'un mélange de monomères polymérisable dans un bâti pour la construction d'une batterie ou sur un support et de polymérisation du mélange de monomères polymérisable, dans lequel le mélange comprend au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ci-dessous :

$$CH_2{=}C(R^1)C({=}O)[O(CH_2)_x(CH(CH_3))_y]_zNHC({=}O)OR^2\text{-} \qquad (1)$$

dans laquelle chacun de $R^1$, $R^2$, x, y et z a la même signification que dans la revendication 1, au moins un sel d'électrolyte et éventuellement un plastifiant.

11. Procédé pour fabriquer une batterie selon la revendication 10, dans lequel le (co)polymère de l'électrolyte polymère solide comprend un polymère produit à partir d'un mélange de monomères de

A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ;
B) 0 à 95 % en poids d'au moins un composé qui contient un motif représenté par la formule générale (1) par molécule et pas de groupes à insaturation éthylénique dans le reste de la molécule ; et
C) 0 à 95 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans l'électrolyte.

12. Procédé pour fabriquer une batterie, qui comprend les étapes de disposition d'un mélange de monomères polymérisable pour l'électrolyte polymère solide dans un bâti pour la construction d'une batterie ou sur un support, et de polymérisation du mélange de monomères polymérisable, dans lequel le mélange comprend au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (2) ci-dessous :

$$CH_2{=}C(R^1)C({=}O)[O(CH_2)_x(CH(CH_3))_y]_zNHC({=}O)(OR^3)_n\text{-} \qquad (2)$$

dans laquelle chacun de $R^1$, $R^3$, x, y et z a la même signification que dans la revendication 3, au moins un sel d'électrolyte et éventuellement un plastifiant.

**13.** Procédé pour fabriquer une batterie selon la revendication 12, dans lequel le (co)polymère de l'électrolyte polymère solide comprend un polymère produit à partir d'un mélange de monomères de

A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (2) ;
B) 0 à 95 % en poids d'au moins un composé qui contient un motif représenté par la formule générale (1) par molécule et pas de groupes à insaturation éthylénique dans le reste de la molécule ; et
C) 0 à 80 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans l'électrolyte.

**14.** Electrode qui comprend un (co)polymère pouvant être obtenu à partir de (a) au moins un composé qui contient une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ci-dessous :

$$CH_2{=}C(R^1)C({=}O)[O(CH_2)_x(CH(CH_3))_y]_zNHC({=}O)OR^2\text{-} \quad (1)$$

dans laquelle chacun de $R^1$, $R^2$, x, y et z a la même signification que dans la revendication 1, et de (b) une substance électroactive ou un matériau polarisable.

**15.** Electrode selon la revendication 14, dans laquelle le (co)polymère pour fabriquer une électrode comprend un polymère produit à partir d'un mélange de monomères de

A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ;
B) 0 à 95 % en poids d'au moins un composé qui contient un motif représenté par la formule générale (1) par molécule et pas de groupes à insaturation éthylénique dans le reste de la molécule ; et
C) 0 à 80 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans l'électrode.

**16.** Electrode qui comprend un (co)polymère pouvant être obtenu à partir de (a) au moins un composé qui contient une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (2) ci-dessous :

$$CH_2{=}C(R^1)C({=}O)[O(CH_2)_x(CH(CH_3))_y]_zNHC({=}O)(OR^3)_n\text{-} \quad (2)$$

dans laquelle chacun de $R^1$, $R^3$, x, y et z a la même signification que dans la revendication 3, et de (b) une substance électroactive ou un matériau polarisable.

**17.** Electrode selon la revendication 16, dans laquelle le (co)polymère pour fabriquer une électrode comprend un polymère produit à partir d'un mélange de monomères de

A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques

étant chacun remplacés par un motif représenté par la formule générale (2) ;
B) 0 à 95 % en poids d'au moins un composé qui contient un motif représenté par la formule générale (1) par molécule et pas de groupes à insaturation éthylénique dans le reste de la molécule ; et
C) 0 à 80 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans l'électrode.

**18.** Electrode selon l'une quelconque des revendications 14 à 17, dans laquelle la substance électroactive ou le matériau polarisable comprend un polymère à base d'aniline soluble dans un solvant organique ou un autre polymère électroconducteur, un oxyde métallique, un sulfure métallique ou un matériau carboné.

**19.** Condensateur à couche double électrique comprenant des électrodes polarisables et une substance conductrice ionique agencée entre les électrodes, dans lequel la substance conductrice ionique comprend l'électrolyte polymère solide tel que revendiqué dans l'une quelconque des revendications 1 à 6.

**20.** Condensateur à couche double électrique comprenant des électrodes polarisables et une substance conductrice ionique agencée entre les électrodes, dans lequel les électrodes polarisables comprennent un composite de :

(a) un (co)polymère pouvant être obtenu à partir d'au moins un composé qui contient une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ci-dessous :

$$CH_2{=}C(R^1)C({=}O)[O(CH_2)_x(CH(CH_3))_y]_zNHC({=}O)OR^2\text{-} \qquad (1)$$

dans laquelle chacun de $R^1$, $R^2$, x, y et z a la même signification que dans la revendication 1, et
(b) un matériau carboné.

**21.** Condensateur à couche double électrique selon la revendication 20, dans lequel le (co)polymère du composite comprend un polymère produit à partir d'un mélange de monomères de

A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ;
B) 0 à95 % en poids d'au moins un composé qui contient un motif représenté par la formule générale (1) par molécule et pas de groupes à insaturation éthylénique dans le reste de la molécule ; et
C) 0 à80 % en poids d'au moins un composé contenant un groupe à insaturation éthylénique et différant de (A) et (B);

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans le composite.

**22.** Condensateur à couche double électrique comprenant des électrodes polarisables et une substance conductrice ionique agencée entre les électrodes, dans lequel les électrodes polarisables comprennent un composite de :

(a) un (co)polymère pouvant être obtenu à partir d'au moins un composé qui contient une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (2) ci-dessous :

$$CH_2{=}C(R^1)C({=}O)[O(CH_2)_x(CH(CH_3))_y]_zNHC({=}O)\ (OR^3)_n\text{-} \qquad (2)$$

dans laquelle chacun de $R^1$, $R^3$, x, y et z a la même signification que dans la revendication 3 ; et
(b) un matériau carboné.

**23.** Condensateur à couche double électrique selon la revendication 22, dans lequel le (co)polymère du composite comprend un polymère produit à partir d'un mélange de monomères de

A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (2) ;
B) 0 à 95 % en poids d'au moins un composé qui contient un motif représenté par la formule générale (1) par molécule et pas de groupes à insaturation éthylénique dans le reste de la molécule ; et
C) 0 à 80 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans le composite.

**24.** Procédé pour fabriquer un condensateur à couche double électrique, qui comprend les étapes de disposition d'un mélange de monomères polymérisable dans un bâti pour la construction d'une condensateur à couche double électrique ou sur un support, et de polymérisation du mélange de monomères polymérisable, dans lequel le mélange comprend

(a) au moins un composé qui contient une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ci-dessous :

$$CH_2{=}C(R^1)C({=}O)[O(CH_2)_x(CH(CH_3))_y]_zNHC({=}O)OR^2\text{-} \qquad (1)$$

dans laquelle chacun de $R^1$, $R^2$, x, y et z a la même signification que dans la revendication 1 ; et
(b) au moins un sel d'électrolyte et éventuellement un plastifiant.

**25.** Procédé pour fabriquer un condensateur à couche double électrique selon la revendication 24, ledit procédé comprenant les étapes de disposition d'un mélange de monomères polymérisable dans un bâti pour la construction d'une condensateur à couche double électrique ou sur un support, et de polymérisation du mélange de monomères polymérisable, dans lequel le mélange comprend

(A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (1) ci-dessus ;
B) 0 à 95 % en poids d'au moins un composé qui contient un motif représenté par la formule générale (1) par molécule et pas de groupes à insaturation éthylénique dans le reste de la molécule ; et
C) 0 à 80 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans le composite.

**26.** Procédé pour fabriquer un condensateur à couche double électrique, qui comprend les étapes de disposition d'un mélange de monomères polymérisable dans un bâti pour la construction d'une condensateur à couche double électrique ou sur un support, et de polymérisation du mélange de monomères polymérisable, dans lequel le mélange comprend

(a) au moins un composé qui contient une structure dérivant d'un alcool polyvalent ayant trois ou plus de trois groupes hydroxyle, au moins deux atomes d'hydrogène desdits groupes hydroxyle alcooliques étant chacun

remplacés par un motif représenté par la formule générale (2) ci-dessous :

$$CH_2{=}C(R^1)C({=}O)[O(CH_2)_x(CH(CH_3))_y]_zNHC({=}O)(OR^3)_n\text{-} \qquad (2)$$

dans laquelle chacun de $R^1$, $R^3$, x, y et z a la même signification que dans la revendication 3 ; et
(b) au moins un sel d'électrolyte et éventuellement un plastifiant.

**27.** Procédé pour fabriquer un condensateur à couche double électrique selon la revendication 26, comprenant les étapes de disposition d'un mélange de monomères polymérisable dans un bâti pour la construction d'une condensateur à couche double électrique ou sur un support, et de polymérisation du mélange de monomères polymérisable, dans lequel le mélange comprend

(A) 1 à 100 % en poids d'au moins un composé qui a une structure dérivant d'un alcool polyvalent ayant trois ou plus de trois groupes hydroxyle, au moins deux atomes d'hydrogène desdits groupes hydroxyle alcooliques étant chacun remplacés par un motif représenté par la formule générale (2) ;
B) 0 à 95 % en poids d'au moins un composé qui contient un motif représenté par la formule générale (1) par molécule et pas de groupes à insaturation éthylénique dans le reste de la molécule ; et
C) 0 à 80 % en poids d'au moins un composé contenant un groupe à insaturation éthylénique et différant de (A) et (B) ;

du moment que la quantité totale de (A) et (B) n'est pas inférieure à 20 % en poids de la quantité totale de (A), (B) et (C), ledit polymère étant contenu en une quantité non inférieure à 50 % en poids par rapport au polymère total utilisé dans le composite.

Fig.1

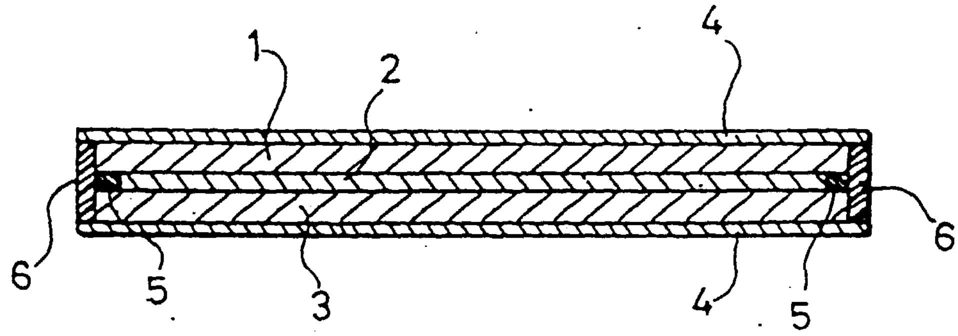


Fig.2